# EUROPEAN PATENT APPLICATION

(11) **EP 4 819 505 A1**
(43) Date of publication of application: **07.10.2026**
(21) Application number: 24910932.3
(22) Date of filing: 19.12.2024
(51) Int. Cl.: H04B 7/06

(54) **COMMUNICATION METHOD AND COMMUNICATION APPARATUS**

(30) Priority: 28.12.2023 CN 202311852961
(71) Applicant: Huawei Technologies Co., Ltd., Shenzhen, Guangdong 518129 (CN)
(72) Inventor: TIAN, Yang, Shenzhen, Guangdong 518129 (CN); SUN, Yan, Shenzhen, Guangdong 518129 (CN); CHEN, Jiaxuan, Shenzhen, Guangdong 518129 (CN); JIN, Yu, Shenzhen, Guangdong 518129 (CN); LIANG, Jing, Shenzhen, Guangdong 518129 (CN)
(74) Representative: MERH-IP Matias Erny Reichl Hoffmann Patentanwälte PartG mbB
(86) International application number: PCT/CN2024/140661
(87) International publication number: WO 2025/140003

(57) **Abstract**

A communication method and a communication apparatus are provided, and are applied to a scenario in which AI is combined with a wireless network. The method includes: A second apparatus obtains first interference signal strength, and sends first indication information to a first apparatus, where the first indication information indicates a first encoder model or a first encoder function, the first encoder model or the first encoder function is used to process CSI, and the first encoder model or the first encoder function is related to the first interference signal strength. In the technical solution of this application, the first encoder model or the first encoder function is determined by taking the first interference signal strength into consideration, to improve Al-based CSI feedback performance.

## Description

This application claims priority to Chinese Patent Application No. 202311852961.0, filed with the China National Intellectual Property Administration on December 28, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In a communication system, a network device needs to determine, based on downlink channel state information (channel state information, CSI), downlink channel related configuration information, for example, resources, a modulation and coding scheme (modulation and coding scheme, MCS), and precoding, for scheduling a downlink data channel for a terminal device. The terminal device may calculate the downlink CSI by measuring a downlink reference signal, generate a CSI report, and feed back the CSI report to the network device.

After artificial intelligence (artificial intelligence, AI) is introduced into a wireless communication network, an AI-based CSI feedback manner emerges. An AI model has a strong feature extraction capability, and can effectively compress channel information, reduce information loss during compression, and ensure accuracy of recovered channel information. However, research shows that when AI-based CSI feedback is used, CSI feedback performance corresponding to a same AI model or AI function is poor at some time instances.

### SUMMARY

This application provides a communication method and a communication apparatus, to improve AI-based CSI feedback performance.

According to a first aspect, a communication method is provided. The method may be performed by a first apparatus, or may be performed by a chip or a circuit in a first apparatus. This is not limited in this application. For ease of description, the following uses an example in which the method is performed by the first apparatus for description. The first apparatus may be a terminal device or a network device, or a chip, a chip system, a circuit, or the like in a terminal device or a network device, or a functional module or the like that can invoke and execute a program in a terminal device or a network device.

The method includes: receiving first indication information from a second apparatus, where the first indication information indicates a first encoder model or a first encoder function, the first encoder model or the first encoder function is used to process channel state information CSI, and the first encoder model or the first encoder function is related to first interference signal strength.

In this application, that the first encoder model or the first encoder function is related to the first interference signal strength may be understood as follows: The first encoder model or the first encoder function is determined based on the first interference signal strength, that is, the first encoder model or the first encoder function is selected or matched by taking the interference signal strength into consideration.

According to the solution provided in this application, the first apparatus may determine the first encoder model or the first encoder function based on the received first indication information, so that the first apparatus can subsequently use the first encoder model or a model corresponding to the first encoder function to perform compression and quantization processing on the CSI, and the second apparatus can use a first decoder model or a model corresponding to a first decoder function to perform decompression and quantization processing on the CSI, thereby improving CSI feedback performance.

In this application, the first encoder model corresponds to the first decoder model, that is, the first encoder model and the first decoder model are usually jointly trained and may be used in a matching manner. It should be understood that the first encoder model and the first decoder model that are used in a matching manner include a same quantity of AI models, with a one-to-one correspondence between them, and the first encoder model and the first decoder model may be understood as paired AI models. The first encoder model and the first decoder model may be referred to as a two-sided model, a two-ended model, a cooperative model, a dual model, or the like. For example, the first encoder model may be an encoder used to compress the CSI, and the first decoder model may be a decoder used to recover the compressed CSI. Similarly, the first encoder function corresponds to the first decoder function, and then the model corresponding to the first encoder function corresponds to the model corresponding to the first decoder function.

With reference to the first aspect, in some implementations of the first aspect, the first encoder function includes one or more first encoder models.

It should be understood that the first encoder function may correspond to one or more encoder models having a same function, and then the first apparatus may determine the one or more encoder models by using the first encoder function.

With reference to the first aspect, in some implementations of the first aspect, the first indication information includes an identifier of the first encoder model and/or a model parameter of the first encoder model; or the first indication information includes an identifier of the first encoder function and/or a parameter of the model corresponding to the first encoder function.

According to the foregoing solution, the first indication information carries the identifier of the first encoder model and/or the model parameter of the first encoder model, so that the first apparatus can determine the first encoder model, and then use the first encoder model to perform compression and quantization processing on the CSI, thereby ensuring CSI feedback performance. Alternatively, the first indication information carries the identifier of the first encoder function and/or the parameter of the model of the first encoder function, so that the first apparatus can determine the model corresponding to the first encoder function, and then use the model to perform compression and quantization processing on the CSI, thereby ensuring CSI feedback performance.

With reference to the first aspect, in some implementations of the first aspect, when the first apparatus is a terminal device, and the second apparatus is a network device, before receiving the first indication information from the second apparatus, the method further includes: receiving configuration information from the second apparatus, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; performing channel measurement on the first reference signal to obtain first interference information, where the first interference information indicates the first interference signal strength; and sending the first interference information to the second apparatus.

According to the foregoing solution, the second apparatus triggers a channel measurement process. To be specific, the first apparatus may perform channel measurement on the first reference signal based on the received configuration information to obtain a channel measurement result, where the channel measurement result includes the first interference information, used to determine a current channel interference level, so that an appropriate encoder model or encoder function can be subsequently selected or matched based on the first interference information, thereby ensuring network performance.

With reference to the first aspect, in some implementations of the first aspect, when the first apparatus is the terminal device, and the second apparatus is the network device, before receiving the first indication information from the second apparatus, the method further includes: sending model library information to the second apparatus, where the model library information indicates mapping relationships between a plurality of encoder models and a plurality of interference signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is included in one of the plurality of interference signal strength ranges.

According to the foregoing solution, the terminal device sends the model library information to the network device, so that the network device can determine the corresponding first encoder model or first encoder function from the model library information based on the obtained first interference signal strength. In this way, the first apparatus and the second apparatus can subsequently use the first encoder model and the first decoder model that match the first encoder model, or use the model corresponding to the first encoder function and the model, corresponding to the first decoder function, that matches the model corresponding to the first encoder function to compress and recover channel information, thereby reducing signaling overheads and improving CSI feedback performance.

With reference to the first aspect, in some implementations of the first aspect, when the first apparatus is a network device, and the second apparatus is a terminal device, before receiving the first indication information from the second apparatus, the method further includes: sending configuration information to the second apparatus, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; and first interference information is obtained by measuring the first reference signal, and the first interference information indicates the first interference signal strength.

With reference to the first aspect, in some implementations of the first aspect, when the first apparatus is the network device, and the second apparatus is the terminal device, before sending the configuration information to the second apparatus, the method further includes: receiving a request message from the second apparatus, where the request message is used to request thefirst apparatus to send the configuration information.

According to the foregoing solution, the network device may determine, based on the request message of the terminal device, to trigger a signal interference measurement procedure, that is, trigger sending of the configuration information to the terminal device, so that the terminal device can perform channel measurement on the first reference signal based on the configuration information to obtain the first interference information, thereby selecting an appropriate first encoder model or first encoder function by taking the first interference information (or the first interference signal strength) into consideration, to improve CSI feedback performance.

With reference to the first aspect, in some implementations of the first aspect, when the first apparatus is the network device, and the second apparatus is the terminal device, the method further includes: sending second indication information to the second apparatus, where the second indication information indicates that the first apparatus has selected or matched a first decoder model or a first decoder function, the first decoder model corresponds to the first encoder model, and the first decoder function corresponds to the first encoder function.

According to the foregoing solution, it may be determined, by using the second indication information, that the first apparatus and the second apparatus have selected or matched the first encoder model and the first decoder model, or the first encoder function and the first decoder function, so that compression and quantization processing, decompression and quantization processing, and the like on the first reference signal can be implemented, thereby improving CSI feedback performance.

With reference to the first aspect, in some implementations of the first aspect, when the first apparatus is the network device, and the second apparatus is the terminal device, the method further includes: receiving the first interference information from the second apparatus, where the first interference information indicates the first interference signal strength.

According to the foregoing solution, the terminal device sends the first interference information to the network device, and the network device may learn, based on the first interference information, that the first encoder model or the first encoder function that is subsequently indicated by the terminal device by using the first indication information is associated with the first interference information. In other words, the network device may learn that the first encoder model or the first encoder function is determined based on the first interference information.

With reference to the first aspect, in some implementations of the first aspect, when the first apparatus is the terminal device, and the second apparatus is the network device, the method further includes: receiving a first CSI-RS from the second apparatus; and sending a first result to the second apparatus, where the first result is obtained by processing first CSI by using the first encoder model or the first encoder function, the first CSI is obtained by measuring the first CSI-RS, and the first CSI is related to the first interference signal strength.

According to the foregoing solution, based on the selected or matched first encoder model and first decoder model, or the selected or matched first encoder function and first decoder function, the first apparatus and the second apparatus can effectively implement measurement, compression and quantization processing, decompression and quantization processing, and the like on the first reference signal, thereby reducing signaling overheads and improving CSI feedback performance.

With reference to the first aspect, in some implementations of the first aspect, when the first apparatus is the network device, and the second apparatus is the terminal device, the method further includes: sending a first CSI-RS to the second apparatus; and receiving a first result from the second apparatus, where the first result is obtained by processing first CSI based on the first encoder model or the first encoder function, and the first CSI is obtained by measuring the first CSI-RS.

With reference to the first aspect, in some implementations of the first aspect, the method further includes: obtaining a second result, where the second result is obtained by processing the first result based on the first decoder model or the first decoder function, the first decoder model corresponds to the first encoder model, and the first decoder function corresponds to the first encoder function.

It should be understood that in this application, the first encoder model may be deployed on a first apparatus side, and the second encoder model may be deployed on a second apparatus side. In this case, the first apparatus and the second apparatus can perform CSI feedback by using the first encoder model and the first decoder model. Optionally, the first encoder model and the second encoder model may alternatively be deployed on another apparatus side. For example, the first encoder model may be deployed on a third apparatus side (or over the top (over the top, OTT) or a cloud device side), and the second encoder model may be deployed on a fourth apparatus side (or OTT or a cloud device side). After obtaining the first CSI through measurement, the first apparatus needs to perform information exchange with a third apparatus, and the third apparatus performs compression processing on the first CSI by using the first encoder model to obtain the feedback CSI, and sends the feedback CSI to the first apparatus. Correspondingly, after obtaining the feedback CSI, the second apparatus needs to perform information exchange with a fourth apparatus, and the fourth apparatus performs decompression processing on the feedback CSI by using the first decoder model to obtain the recovered CSI, and sends the recovered CSI to the second apparatus.

According to a second aspect, a communication method is provided. The method may be performed by a second apparatus, or may be performed by a chip or a circuit in a second apparatus. This is not limited in this application. For ease of description, the following uses an example in which the method is performed by the second apparatus for description. The second apparatus may be a terminal device or a network device, or a chip, a chip system, a circuit, or the like in a terminal device or a network device, or a functional module or the like that can invoke and execute a program in a terminal device or a network device.

The method includes: obtaining first interference signal strength; and sending first indication information to a first apparatus, where the first indication information indicates a first encoder model or a first encoder function, the first encoder model or the first encoder function is used to process channel state information CSI, and the first encoder model or the first encoder function is related to the first interference signal strength.

In this application, that the first encoder model or the first encoder function is related to the first interference signal strength may be understood as follows: The first encoder model or the first encoder function is determined based on the first interference signal strength, that is, the first encoder model or the first encoder function is selected or matched by taking the interference signal strength into consideration.

According to the solution provided in this application, the second apparatus may select or match the corresponding first encoder model or first encoder function based on the obtained first interference signal strength, and indicate the first encoder model or the first encoder function to the first apparatus by using the first indication information, so that the first apparatus can subsequently use the first encoder model or a model corresponding to the first encoder function to perform compression and quantization processing on the CSI, and the second apparatus can use a first decoder model or a model corresponding to a first decoder function to perform decompression and quantization processing on the CSI, thereby ensuring CSI feedback performance.

With reference to the second aspect, in some implementations of the second aspect, the first encoder function includes one or more first encoder models.

With reference to the second aspect, in some implementations of the second aspect, the first indication information includes an identifier of the first encoder model and/or a model parameter of the first encoder model; or the first indication information includes an identifier of the first encoder function and/or a parameter of the model corresponding to the first encoder function.

With reference to the second aspect, in some implementations of the second aspect, when the first apparatus is a terminal device, and the second apparatus is a network device, obtaining the first interference signal strength includes: receiving first interference information from the first apparatus, where the first interference information indicates the first interference signal strength.

With reference to the second aspect, in some implementations of the second aspect, before receiving the first interference information from the first apparatus, the method further includes: sending configuration information to the first apparatus, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; and the first interference information is obtained by performing channel measurement on the first reference signal.

With reference to the second aspect, in some implementations of the second aspect, when the first apparatus is a terminal device, and the second apparatus is a network device, obtaining the first interference signal strength includes: obtaining first interference information through local retrieval or prediction; or obtaining first interference information through cloud retrieval or prediction.

With reference to the second aspect, in some implementations of the second aspect, when the first apparatus is the terminal device, and the second apparatus is the network device, before sending the first indication information to the first apparatus, the method further includes: receiving model library information from the first apparatus, where the model library information indicates mapping relationships between a plurality of encoder models and a plurality of signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is included in one of the plurality of interference signal strength ranges.

With reference to the second aspect, in some implementations of the second aspect, when the first apparatus is a network device, and the second apparatus is a terminal device, obtaining the first interference signal strength includes: receiving configuration information from the first apparatus, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; and performing channel measurement on the first reference signal based on the configuration information to obtain first interference information, where the first interference information indicates the first interference signal strength.

With reference to the second aspect, in some implementations of the second aspect, when the first apparatus is the network device, and the second apparatus is the terminal device, obtaining the first interference signal strength includes: performing an interference prediction or sensing operation to obtain the first interference signal strength.

With reference to the second aspect, in some implementations of the second aspect, before obtaining the first interference signal strength, when the first apparatus is the network device, and the second apparatus is the terminal device, the method further includes: sending a request message to the first apparatus, where the request message is used to request the first apparatus to send the configuration information.

With reference to the second aspect, in some implementations of the second aspect, when the first apparatus is the network device, and the second apparatus is the terminal device, the method further includes: receiving second indication information from the first apparatus, where the second indication information indicates that the first apparatus has selected or matched a first decoder model or a first encoder function, the first decoder model corresponds to the first encoder model, and the first decoder function corresponds to the first encoder function.

With reference to the second aspect, in some implementations of the second aspect, when the first apparatus is the network device, and the second apparatus is the terminal device, the method further includes: sending the first interference information to the first apparatus, where the first interference information indicates the first interference signal strength.

With reference to the second aspect, in some implementations of the second aspect, when the first apparatus is the terminal device, and the second apparatus is the network device, the method further includes: sending a first CSI-RS to the first apparatus; and receiving a first result from the first apparatus, where the first result is obtained by processing first CSI based on the first encoder model or the first encoder function, the first CSI is obtained by measuring the first CSI-RS, and the first CSI is related to the first interference signal strength.

With reference to the second aspect, in some implementations of the second aspect, the method further includes: obtaining a second result, where the second result is obtained by processing the first result based on the first decoder model or the first decoder function, the first decoder model corresponds to the first encoder model, and the first decoder function corresponds to the first encoder function.

With reference to the second aspect, in some implementations of the second aspect, when the first apparatus is the network device, and the second apparatus is the terminal device, the method further includes: receiving a first CSI-RS from the first apparatus; and sending a first result to the first apparatus, where the first result is obtained by processing first CSI based on the first encoder model or the first encoder function, and the first CSI is obtained by measuring the first CSI-RS.

For beneficial effect of the second aspect and some implementations of the second aspect, correspondingly refer to the related descriptions in the first aspect. Details are not described herein.

According to a third aspect, a communication method is provided. The method may be performed by a terminal device, or may be performed by a chip or a circuit in a terminal device. This is not limited in this application. For ease of description, the following uses an example in which the method is performed by the terminal device for description.

The method includes: receiving first indication information from a network device, where the first indication information indicates a first encoder model or a first encoder function, the first encoder model or the first encoder function is used to process channel state information CSI, and the first encoder model or the first encoder function is related to first interference signal strength.

With reference to the third aspect, in some implementations of the third aspect, the first encoder function includes one or more first encoder models.

With reference to the third aspect, in some implementations of the third aspect, the first indication information includes an identifier of the first encoder model and/or a model parameter of the first encoder model; or the first indication information includes an identifier of the first encoder function and/or a parameter of a model corresponding to the first encoder function.

With reference to the third aspect, in some implementations of the third aspect, before receiving the first indication information from the network device, the method further includes: receiving configuration information from the network device, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; performing channel measurement on the first reference signal to obtain first interference information, where the first interference information indicates the first interference signal strength; and sending the first interference information to the network device.

With reference to the third aspect, in some implementations of the third aspect, before receiving the first indication information from the network device, the method further includes: sending model library information to the network device, where the model library information indicates mapping relationships between a plurality of encoder models and a plurality of interference signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is included in one of the plurality of interference signal strength ranges.

With reference to the third aspect, in some implementations of the third aspect, the method further includes: receiving a first CSI-RS from the network device; and sending a first result to the network device, where the first result is obtained by processing first CSI based on the first encoder model or the first encoder function, the first CSI is obtained by measuring the first CSI-RS, and the first CSI is related to the first interference signal strength.

According to a fourth aspect, a communication method is provided. The method may be performed by a network device, or may be performed by a chip or a circuit in a network device. This is not limited in this application. For ease of description, the following uses an example in which the method is performed by the network device for description.

The method includes: obtaining first interference signal strength; and sending first indication information to a terminal device, where the first indication information indicates a first encoder model or a first encoder function, the first encoder model or the first encoder function is used to process channel state information CSI, and the first encoder model or the first encoder function is related to the first interference signal strength.

With reference to the fourth aspect, in some implementations of the fourth aspect, the first encoder function includes one or more first encoder models.

With reference to the fourth aspect, in some implementations of the fourth aspect, the first indication information includes an identifier of the first encoder model and/or a model parameter of the first encoder model; or the first indication information includes an identifier of the first encoder function and/or a parameter of a model corresponding to the first encoder function.

With reference to the fourth aspect, in some implementations of the fourth aspect, obtaining the first interference signal strength includes: receiving first interference information from the terminal device, where the first interference information indicates the first interference signal strength.

With reference to the fourth aspect, in some implementations of the fourth aspect, before receiving the first interference information from the terminal device, the method further includes: sending configuration information to the terminal device, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; and the first interference information is obtained by performing channel measurement on the first reference signal.

With reference to the fourth aspect, in some implementations of the fourth aspect, obtaining the first interference signal strength includes: obtaining first interference information through local retrieval or prediction; or obtaining first interference information through cloud retrieval or prediction.

With reference to the fourth aspect, in some implementations of the fourth aspect, the method further includes: receiving model library information from the terminal device, where the model library information indicates mapping relationships between a plurality of encoder models and a plurality of signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is included in one of the plurality of interference signal strength ranges.

With reference to the fourth aspect, in some implementations of the fourth aspect, the method further includes: sending a first CSI-RS to the terminal device; and receiving a first result from the terminal device, where the first result is obtained by processing first CSI based on the first encoder model or the first encoder function, and the first CSI is obtained by measuring the first CSI-RS.

With reference to the fourth aspect, in some implementations of the fourth aspect, the method further includes: obtaining a second result, where the second result is obtained by processing the first result based on the first decoder model or the first decoder function, the first decoder model corresponds to the first encoder model, and the first decoder function corresponds to the first encoder function.

According to a fifth aspect, a communication method is provided. The method may be performed by a terminal device, or may be performed by a chip or a circuit in a terminal device. This is not limited in this application. For ease of description, the following uses an example in which the method is performed by the terminal device for description.

The method includes: obtaining first interference signal strength; and sending second indication information to a network device, where the second indication information indicates a first encoder model or a first encoder function, the first encoder model or the first encoder function is used to process channel state information CSI, and the first encoder model or the first encoder function is related to the first interference signal strength.

With reference to the fifth aspect, in some implementations of the fifth aspect, the first encoder function includes one or more first encoder models.

With reference to the fifth aspect, in some implementations of the fifth aspect, the second indication information includes an identifier of the first encoder model and/or a model parameter of the first encoder model; or the second indication information includes an identifier of the first encoder function and/or a parameter of a model corresponding to the first encoder function.

With reference to the fifth aspect, in some implementations of the fifth aspect, obtaining the first interference signal strength includes: receiving configuration information from the network device, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; and performing channel measurement on the first reference signal based on the configuration information to obtain first interference information, where the first interference information indicates the first interference signal strength.

With reference to the fifth aspect, in some implementations of the fifth aspect, obtaining the first interference signal strength includes: performing an interference prediction or sensing operation to obtain the first interference signal strength.

With reference to the fifth aspect, in some implementations of the fifth aspect, before obtaining the first interference signal strength, the method further includes: sending a request message to the network device, where the request message is used to request the network device to send the configuration information.

With reference to the fifth aspect, in some implementations of the fifth aspect, the method further includes: receiving third indication information from the network device, where the third indication information indicates that the first apparatus has selected or matched a first decoder model or a first encoder function, the first decoder model corresponds to the first encoder model, and the first decoder function corresponds to the first encoder function.

With reference to the fifth aspect, in some implementations of the fifth aspect, the method further includes: sending first interference information to the network device, where the first interference information indicates the first interference signal strength.

With reference to the fifth aspect, in some implementations of the fifth aspect, the method further includes: receiving a first CSI-RS from the network device; and sending a first result to the network device, where the first result is obtained by processing first CSI based on the first encoder model or the first encoder function, the first CSI is obtained by measuring the first CSI-RS, and the first CSI is related to the first interference signal strength.

According to a sixth aspect, a communication method is provided. The method may be performed by a network device, or may be performed by a chip or a circuit in a network device. This is not limited in this application. For ease of description, the following uses an example in which the method is performed by the network device for description.

The method includes: receiving second indication information from a terminal device, where the second indication information indicates a first encoder model or a first encoder function, the first encoder model or the first encoder function is used to process channel state information CSI, and the first encoder model or the first encoder function is related to first interference signal strength.

With reference to the sixth aspect, in some implementations of the sixth aspect, the first encoder function includes one or more first encoder models.

With reference to the sixth aspect, in some implementations of the sixth aspect, the second indication information includes an identifier of the first encoder model and/or a model parameter of the first encoder model; or the second indication information includes an identifier of the first encoder function and/or a parameter of a model corresponding to the first encoder function.

With reference to the sixth aspect, in some implementations of the sixth aspect, before receiving the second indication information from the terminal device, the method further includes: sending configuration information to the terminal device, where the configuration information indicates a first reference signal, and the first reference signal includes one or more of the following: a channel state information reference signal CSI-RS, a zero power channel state information reference signal ZP CSI-RS, or a channel state information interference measurement CSI-IM signal; and first interference information is obtained by measuring the first reference signal, and the first interference information indicates the first interference signal strength.

With reference to the sixth aspect, in some implementations of the sixth aspect, before sending the configuration information to the terminal device, the method further includes: receiving a request message from the terminal device, where the request message is used to request the network device to send the configuration information.

With reference to the sixth aspect, in some implementations of the sixth aspect, the method further includes: sending third indication information to the terminal device, where the third indication information indicates that the first apparatus has selected or matched a first decoder model or a first decoder function, the first decoder model corresponds to the first encoder model, and the first decoder function corresponds to the first encoder function.

With reference to the sixth aspect, in some implementations of the sixth aspect, the method further includes: receiving first interference information from the terminal device, where the first interference information indicates the first interference signal strength.

With reference to the sixth aspect, in some implementations of the sixth aspect, the method further includes: sending a first CSI-RS to the terminal device; and receiving a first result from the terminal device, where the first result is obtained by processing first CSI based on the first encoder model or the first encoder function, and the first CSI is obtained by measuring the first CSI-RS.

With reference to the sixth aspect, in some implementations of the sixth aspect, the method further includes: obtaining a second result, where the second result is obtained by processing the first result based on the first decoder model or the first decoder function, the first decoder model corresponds to the first encoder model, and the first decoder function corresponds to the first encoder function.

For beneficial effect of the third aspect to the sixth aspect and some implementations of the third aspect to the sixth aspect, correspondingly refer to related descriptions in the first aspect or the second aspect. Details are not described herein.

According to a seventh aspect, a communication apparatus is provided. The apparatus includes: a transceiver unit, configured to receive first indication information from a second apparatus, where the first indication information indicates a first encoder model or a first encoder function, the first encoder model or the first encoder function is used to process channel state information CSI, and the first encoder model or the first encoder function is related to first interference signal strength.

The transceiver unit may perform receiving and sending processing in the first aspect, and a processing unit of the communication apparatus may perform processing other than receiving and sending in the first aspect.

According to an eighth aspect, a communication apparatus is provided. The apparatus includes: a processing unit, configured to obtain first interference signal strength; and a transceiver unit, configured to send first indication information to a first apparatus, where the first indication information indicates a first encoder model or a first encoder function, the first encoder model or the first encoder function is used to process channel state information CSI, and the first encoder model or the first encoder function is related to the first interference signal strength.

The transceiver unit may perform receiving and sending processing in the second aspect, and the processing unit of the communication apparatus may perform processing other than receiving and sending in the second aspect.

According to a ninth aspect, a communication apparatus is provided. The apparatus includes: a transceiver unit, configured to receive first indication information from a network device, where the first indication information indicates a first encoder model or a first encoder function, the first encoder model or the first encoder function is used to process channel state information CSI, and the first encoder model or the first encoder function is related to first interference signal strength.

The transceiver unit may perform receiving and sending processing in the third aspect, and a processing unit of the communication apparatus may perform processing other than receiving and sending in the third aspect.

According to a tenth aspect, a communication apparatus is provided. The apparatus includes: a processing unit, configured to obtain first interference signal strength; and a transceiver unit, configured to send first indication information to a terminal device, where the first indication information indicates a first encoder model or a first encoder function, the first encoder model or the first encoder function is used to process channel state information CSI, and the first encoder model or the first encoder function is related to the first interference signal strength.

The transceiver unit may perform receiving and sending processing in the fourth aspect, and the processing unit of the communication apparatus may perform processing other than receiving and sending in the fourth aspect.

According to an eleventh aspect, a communication apparatus is provided. The apparatus includes: a processing unit, configured to obtain first interference signal strength; and a transceiver unit, configured to send second indication information to a network device, where the second indication information indicates a first encoder model or a first encoder function, the first encoder model or the first encoder function is used to process channel state information CSI, and the first encoder model or the first encoder function is related to the first interference signal strength.

The transceiver unit may perform receiving and sending processing in the fifth aspect, and the processing unit of the communication apparatus may perform processing other than receiving and sending in the fifth aspect.

According to a twelfth aspect, a communication apparatus is provided. The apparatus includes: a transceiver unit, configured to receive second indication information from a terminal device, where the second indication information indicates a first encoder model or a first encoder function, the first encoder model or the first encoder function is used to process channel state information CSI, and the first encoder model or the first encoder function is related to first interference signal strength.

The transceiver unit may perform receiving and sending processing in the sixth aspect, and a processing unit of the communication apparatus may perform processing other than receiving and sending in the sixth aspect.

According to a thirteenth aspect, a communication apparatus is provided. The apparatus includes a processing circuit. The processing circuit is configured to execute a computer program, so that the apparatus performs the method according to any one of the first aspect to the sixth aspect and the possible implementations of the first aspect to the sixth aspect.

Optionally, the processing circuit is one or more processors, or all or some of the one or more processors are circuits configured to process functions.

Optionally, the communication apparatus further includes a memory, the memory is configured to store the computer program, and there are one or more memories.

Optionally, the memory may be integrated with the processor, or the memory and the processor are separately disposed, or the memory is located in the processor.

Optionally, the communication apparatus further includes a transceiver circuit, for example, a transceiver or an input/output circuit.

According to a fourteenth aspect, a communication system is provided. The communication system includes a terminal device and a network device. The terminal device is configured to perform the method according to any one of the third aspect or the fifth aspect and the possible implementations of the third aspect or the fifth aspect, and the network device is configured to perform the method according to any one of the fourth aspect or the sixth aspect and the possible implementations of the fourth aspect or the sixth aspect. It should be understood that this implementation may be understood as that a first encoder model is deployed on the terminal device, and a first decoder model is deployed on the network device.

Optionally, if the first encoder model is deployed on a network element #1, and the first decoder model is deployed on a network element #2, the communication system may further include the network element #1 and the network element #2.

According to a fifteenth aspect, a communication system is provided. The communication system includes a first apparatus and a second apparatus. The second apparatus is configured to perform the method according to any one of the first aspect and the possible implementations of the first aspect, and the first apparatus is configured to perform the method according to any one of the first aspect and the possible implementations of the first aspect. It should be understood that this implementation may be understood as that a first encoder model is deployed on the first apparatus, and a first decoder model is deployed on the second apparatus.

Optionally, if the first encoder model is deployed on a network element #1, and the first decoder model is deployed on a network element #2, the communication system may further include the network element #1 and the network element #2.

According to a sixteenth aspect, a computer-readable storage medium is provided. The computer-readable storage medium stores a computer program or code. When the computer program or code is run on a computer, the computer is enabled to perform the method according to any one of the first aspect to the sixth aspect and the possible implementations of the first aspect to the sixth aspect.

According to a seventeenth aspect, a chip is provided. The chip includes at least one processing circuit. The processing circuit is configured to run a computer program, so that the chip performs the method according to any one of the first aspect to the sixth aspect and the possible implementations of the first aspect to the sixth aspect.

The chip may include an output circuit or interface configured to send information or data and an input circuit or interface configured to receive information or data.

According to an eighteenth aspect, a computer program product is provided. The computer program product includes computer program code. When the computer program code is run on a computer, the method according to any one of the first aspect to the sixth aspect and the possible implementations of the first aspect to the sixth aspect is performed.

### BRIEF DESCRIPTION OF DRAWINGS

FIG. 1 and FIG. 2 are diagrams of communication systems to which embodiments of this application are applicable;
FIG. 3 is a block diagram of an auto-encoder;
FIG. 4 is a diagram of an AI application framework;
FIG. 5 is a schematic interaction flowchart of a first communication method according to an embodiment of this application;
FIG. 6 is a schematic interaction flowchart of a second communication method according to an embodiment of this application;
FIG. 7 is a schematic interaction flowchart of a third communication method according to an embodiment of this application;
FIG. 8 is a schematic interaction flowchart of a fourth communication method according to an embodiment of this application;
FIG. 9 is a schematic interaction flowchart of a fifth communication method according to an embodiment of this application;
FIG. 10 is a block diagram of a communication apparatus according to an embodiment of this application; and
FIG. 11 is a block diagram of another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation mobile communication system, or a converged system of a plurality of systems. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

A device in the communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device. It may be understood that the terminal device/network device in this application may be replaced with a terminal device, to perform a corresponding communication method in this application with a network device.

The terminal device in embodiments of this application includes various devices having a wireless communication function, and the terminal device may be configured to be connected to a person, an object, a machine, or the like. The terminal device may be widely applied to various scenarios, for example, cellular communication, D2D, V2X, peer to peer (peer to peer, P2P), M2M, MTC, IoT, virtual reality (virtual reality, VR), augmented reality (augmented reality, AR), industrial control, autonomous driving, telemedicine, smart grid, smart home, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or a UE is used below for description.

It should be understood that in some scenarios, the UE may alternatively be configured to serve as a base station. For example, the UE may serve as a scheduling entity that provides a sidelink signal between UEs in a scenario such as V2X, D2D, or P2P.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

The network device in embodiments of this application may be a device configured to communicate with the terminal device. The network device may include an access network device or a radio access network device. For example, the network device may be a base station. The access network device in embodiments of this application may indicate a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmitting and receiving point, TRP), a transmission point (transmitting point, TP), a primary station, a secondary station, a multi-standard radio (multi-standard radio, MSR) node, a home base station, a network controller, an access node, a wireless node, an access point (AP), a transmission node, a transceiver node, a baseband unit ( baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or may be a combination thereof. Alternatively, the base station may be a communication module, a modem, or a chip disposed in the foregoing device or apparatus. Alternatively, the base station may be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured to serve as a mobile base station, and one or more cells may move based on a location of the mobile base station. In another example, the helicopter or the uncrewed aerial vehicle may be configured to serve as a device configured to communicate with another base station.

In some deployments, a plurality of RAN nodes cooperate to assist the terminal in implementing radio access, and different RAN nodes respectively implement some functions of the base station. For example, the RAN node may be a CU, a DU, a central unit-control plane (central unit-control plane, CU-CP), a central unit-user plane (central unit-user plane, CU-UP), or an RU. The CU and the DU may be separately disposed, or may be included in a same network element, for example, a BBU. A radio frequency unit (radio unit, RU) may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, in the fronthaul interface, a part of downlink and/or uplink baseband functions are moved for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different split manners between the DU and the RU correspond to different categories (categories, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions (to be specific, one or more of encoding, rate matching, scrambling, modulation, or layer mapping) before the layer mapping, and other functions (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions (to be specific, one or more functions of decoding, de-rate matching, descrambling, demodulation, inverse discrete Fourier transform (inverse discrete Fourier transform, IDFT), channel equalization, or RE demapping) before the demapping, and other functions (for example, one or more of digital BF or fast Fourier transform (fast Fourier transform, FFT)/CP removal) after the demapping are moved to the RU for implementation. It may be understood that for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, alternatively, the radio access network may be an open radio access network (open radio access network, O-RAN/ORAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented through a software module, a hardware module, or a combination of a software module and a hardware module.

In embodiments of this application, an apparatus configured to implement a function of the network device may be the network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including an indoor or outdoor device, a hand-held device, or a vehicle-mounted device; may be deployed on water; or may be deployed on an airplane, a balloon, and a satellite in the air. Scenarios in which the network device and the terminal device are located are not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

The network device may further include a core network device, for example, an access and mobility management function (access and mobility management function, AMF), an operation, administration, and maintenance device (operation, administration, and maintenance, OAM), a third-party device such as an over the top (over the top, OTT) device or a cloud server, or a device provided with an AI module such as a RAN intelligent controller (RAN intelligent controller, RIC).

In embodiments of this application, the terminal device may be a terminal device or a component (for example, a chip or a circuit) of the terminal device.

Optionally, the network device may be a network device provided with one or more AI modules. For example, the network device may be one or more devices of a core network device, an access network node (RAN node), or an OAM. For example, the AI module may be a RAN intelligent controller (RAN intelligent controller, RIC), for example, a near-real-time RIC or a non-real-time RIC. For example, the near-real-time RIC is disposed in a RAN node (for example, a CU or a DU), and the non-real-time RIC is disposed in an OAM, a cloud server, a core network device, or another network device.

First, a communication system to which embodiments of this application are applicable is briefly described below.

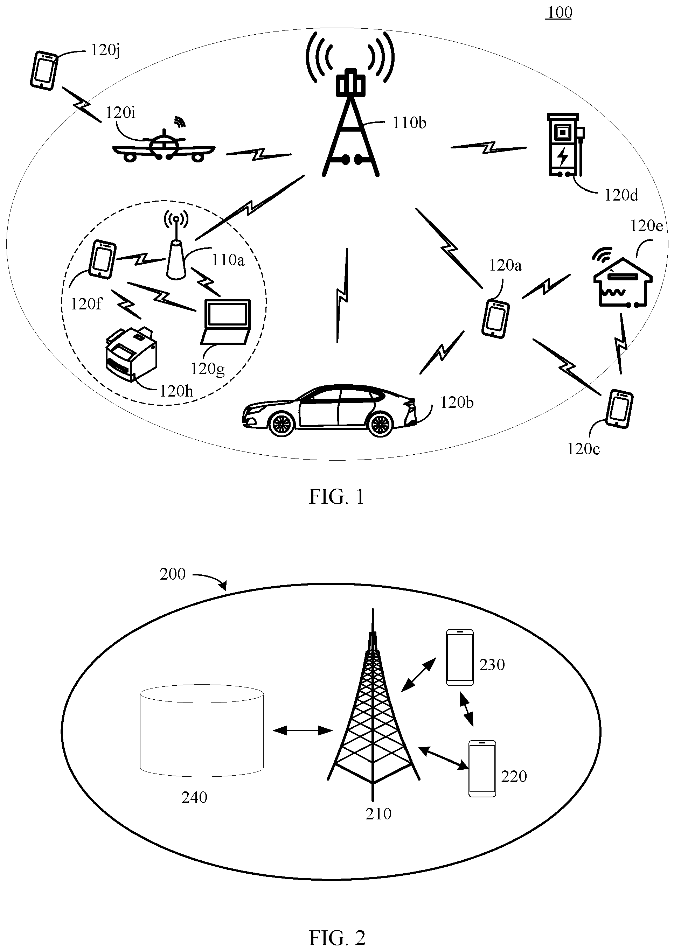

FIG. 1 is a diagram of a wireless communication system to which embodiments of this application are applicable. As shown in FIG. 1, the wireless communication system includes a radio access network 100. The radio access network 100 may be a next generation (for example, 6G or a later version) radio access network, or a conventional (for example, 5G, 4G, 3G, or 2G) radio access network. One or more terminal devices (120a to 120j, collectively referred to as 120) may be connected to each other or connected to one or more network devices (110a and 110b, collectively referred to as 110) in the radio access network 100. FIG. 1 is merely a diagram. The wireless communication system may further include another device, for example, may further include a core network device, a wireless relay device, and/or a wireless backhaul device, which are not shown in FIG. 1.

During actual application, the wireless communication system may include a plurality of network devices, and may also include a plurality of terminal devices. This is not limited. One network device may serve one or more terminal devices. One terminal device may also access one or more network devices. Quantities of terminal devices and network devices included in the wireless communication system are not limited in embodiments of this application.

FIG. 2 is a diagram of a wireless communication system 200 to which embodiments of this application are applicable. As shown in FIG. 2, the wireless communication system 200 may include at least one network device, for example, a network device 210 shown in FIG. 2. The wireless communication system 200 may further include at least one terminal device, for example, a terminal device 220 and a terminal device 230 shown in FIG. 2. The wireless communication system 200 may further include an AI network element (also referred to as an AI entity), for example, an AI network element 240 shown in FIG. 2, configured to perform an AI-related operation, for example, construct a training dataset or train an AI model.

In a possible implementation, the network device 210 may send data related to training of the AI model to the AI network element 240, and the AI network element 240 constructs the training dataset, and trains the AI model. For example, the data related to the training of the AI model may include data reported by the terminal device. The AI network element 240 may send a result of an operation related to the AI model to the network device 210, and forward the result to the terminal device through the network device 210. For example, the result of the operation related to the AI model may include at least one of the following: a trained AI model, an evaluation result or a test result for the model, or the like. For example, a part of the trained AI model may be deployed on the network device 210, and the other part is deployed on the terminal device. Alternatively, the trained AI model may be deployed on the network device 210. Alternatively, the trained AI model may be deployed on the terminal device.

It should be understood that FIG. 2 is described only by using an example in which the AI network element 240 is directly connected to the network device 210. In another scenario, the AI network element 240 may alternatively be connected to the terminal device. Alternatively, the AI network element 240 may be connected to both the network device 210 and the terminal device. Alternatively, the AI network element 240 may be connected to the network device 210 through a third-party network element. A connection relationship between the AI network element and another network element is not limited in embodiments of this application.

Alternatively, the AI network element 240 may be disposed in the network device and/or the terminal device as a module, for example, disposed in the network device 110b or the terminal device shown in FIG. 1.

Optionally, the AI network element 240 and the network device 210 may be different modules of a same device, or may be different devices that are separated. It should be noted that FIG. 1 and FIG. 2 are merely simplified diagrams of examples for ease of understanding. For example, the communication system may further include another device, for example, may further include a wireless relay device and/or a wireless backhaul device, which are/is not shown in FIG. 1 and FIG. 2. During actual application, the communication system may include a plurality of network devices, and may also include a plurality of terminal devices. Quantities of network devices and terminal devices included in the communication system are not limited in embodiments of this application.

For ease of understanding embodiments of this application, the following briefly describes terms used in embodiments of this application.

### (1) AI model

The AI model is an algorithm or a computer program that can implement an AI function. The AI model represents a mapping relationship between an input and an output of the model. In other words, the AI model is a function model that maps an input in a specific dimension to an output in a specific dimension. A parameter of the function model may be obtained through machine learning and training. For example, f(x)=mx²+n is a quadratic function model, and may be considered as an AI model, m and n are parameters of the AI model, and m and n may be obtained through machine learning and training. For example, the AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

It may be understood that the AI model may be implemented by a hardware circuit, software, or a combination of software and hardware. This is not limited. A non-limitative example of the software includes program code, a program, a subprogram, an instruction, an instruction set, code, a code segment, a software module, an application program, a software application program, or the like.

### (2) Machine learning (machine learning, ML)

ML is an implementation of artificial intelligence. The machine learning is a method of enabling machines to learn, so that the machines can implement functions that cannot be implemented through direct programming. In practice, the machine learning is a method of training a model by using data and then performing prediction by using the model. There are many machine learning methods, such as a neural network (neural network, NN), a decision tree, and a support vector machine. A machine learning theory is mainly to design and analyze some algorithms that enable computers to learn automatically. A machine learning algorithm is an algorithm of automatically analyzing data to obtain a rule and predicting unknown data according to the rule.

### (3) Neural network (neural network, NN)

The neural network is a specific implementation form of AI or machine learning. According to a universal approximation theorem, the neural network can approximate any continuous function in theory, so that the neural network has a capability of learning any mapping.

The neural network may include neurons. The neuron may be an operation unit that uses xs and an intercept of 1 as an input. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

A type of the AI model being the neural network is used as an example. The AI model used in this application may be a deep neural network (deep neural network, DNN). According to a network construction manner, the DNN may include a feed forward neural network (feed forward neural network, FNN), a convolutional neural network (convolutional neural network, CNN), a recurrent neural network (recurrent neural network, RNN), and the like.

### (4) Auto-encoder (auto-encoder, AE)

The auto-encoder AE is an unsupervised learning neural network, and is characterized by using input data as label data. Therefore, the AE may also be understood as a self-supervised learning neural network. The AE may be configured to compress and recover data. For example, an encoder in the AE may perform compression (encoding) processing on data A to obtain data B; and a decoder in the AE may perform decompression (decoding) processing on the data B to recover the data A, or it may be understood as that the decoder is an inverse operation of the encoder.

For example, the AI model in embodiments of this application may include an encoder and a decoder. The encoder and the decoder are used in a matching manner. It may be understood that the encoder and the decoder are paired AI models. The encoder and the decoder may be respectively deployed on the terminal device and the network device. Optionally, the AI model in embodiments of this application may be a single-side model, and the AI model may be deployed on the terminal device or the network device.

### (5) Two-sided (two-sided) model

The two-sided model may also be referred to as a two-ended model, a cooperative model, a dual model, or the like. The two-sided model is a model including a plurality of submodels. The plurality of submodels included in the model need to match each other. The plurality of submodels may be deployed on different nodes.

In embodiments of this application, an encoder used to compress CSI and a decoder used to recover compressed CSI are used. The encoder and the decoder are used in a matching manner. It may be understood that the encoder and the decoder are paired AI models. One encoder may include one or more AI models, and a decoder matching the encoder also includes one or more AI models. The encoder and the decoder that are used in a matching manner include a same quantity of AI models, with a one-to-one correspondence between them.

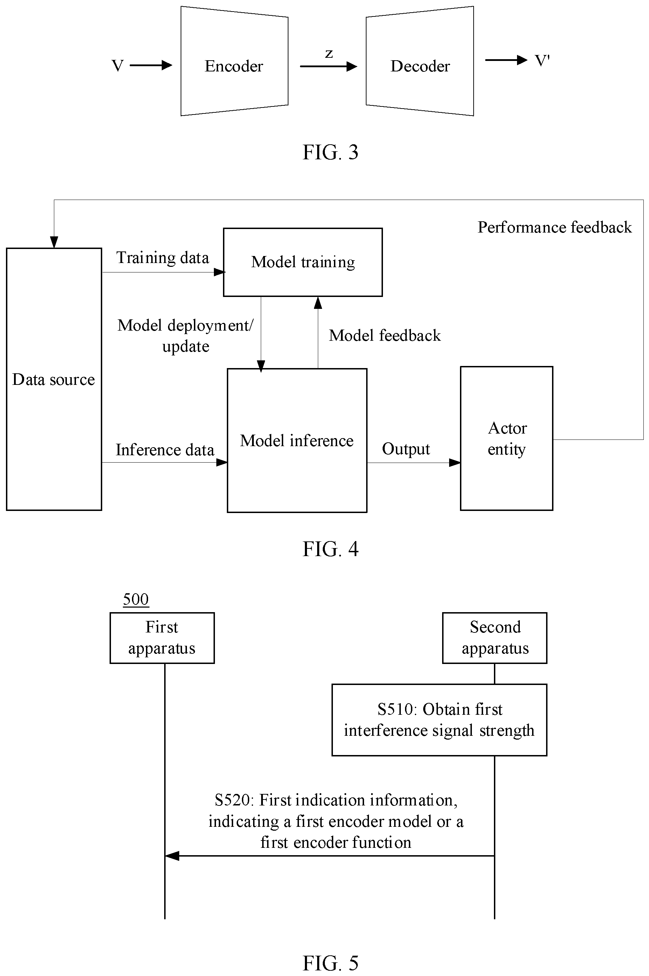

In a possible design, an encoder (encoder) and a decoder (decoder) that are paired may be specifically two parts in a same AE. As shown in FIG. 3, an encoder and a decoder are respectively deployed on different nodes. An AE model is a typical two-ended model. The encoder and the decoder of the AE model are usually jointly trained and may be used in a matching manner. For example, the encoder may process an input V to obtain a processed result z, and the decoder may decode the output z of the encoder into an expected output V'. In other words, CSI feedback may be implemented based on the AI model of the AE. For example, a UE side performs compression and quantization on CSI by using the encoder, and a base station recovers the CSI by using the decoder. For the base station, an input of the model is the CSI fed back by a UE, and the output is the recovered CSI. The CSI fed back by the UE needs to be used as a ground truth label of the recovered CSI for model training.

### (6) Training dataset and inference data

In the machine learning field, a ground truth (ground truth) is usually considered as accurate data or true data.

The training dataset is used to train an AI model. The training dataset may include an input of the AI model, or include an input and a target output of the AI model. The training dataset includes one or more pieces of training data. The training data may include a training sample input into the AI model, and may also include the target output of the AI model. The target output may also be referred to as a label, a sample label, or a label sample. The label is a ground truth.

In the communication field, the training dataset may include simulated data collected by a simulation platform, may include experimental data collected in an experiment scenario, or may include actual measured data collected in an actual communication network. Geographical environments and channel conditions in which data is generated are different. For example, indoor or outdoor environments, moving speeds, frequency bands, or antenna configurations are different. Therefore, collected data may be classified when the data is obtained. For example, data with a same channel propagation environment and a same antenna configuration is classified into one type.

Model training is essentially learning some features of training data from the training data. In a process of training an AI model (for example, a neural network model), because an output of the AI model is expected to be as close as possible to a value that is actually expected to be predicted, a current predicted value of the network may be compared with a target value that is actually expected, and then a weight vector of each layer of the AI model is updated based on a difference between the two (certainly, an initialization process is usually performed before the first update, that is, a parameter is preconfigured for each layer of the AI model). For example, if the predicted value of the network is larger, the weight vector is adjusted to obtain a smaller predicted value. The weight vector is continuously adjusted until the AI model can predict the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a greater difference. In this case, training of the AI model is a process of minimizing the loss as much as possible, so that a value of the loss function is less than a threshold, or the value of the loss function meets a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of a neuron.

The inference data may be used as an input of a trained AI model for inference by the AI model. In a process of model inference, the inference data may be input into the AI model to obtain a corresponding output, namely, an inference result.

The AI model design mainly includes a data collection phase (for example, collection of training data and/or inference data), a model training phase, and a model inference phase, and may further include an inference result application phase.

FIG. 4 is an AI application framework.

In the data collection phase, a data source (data source) is used to provide a training dataset and inference data. In the model training phase, an AI model is obtained through analysis or training by using the training data (training data) provided by the data source. The AI model represents a mapping relationship between an input and an output of the model. Obtaining the AI model through learning by a model training node is equivalent to obtaining the mapping relationship between the input and the output of the model through learning by using the training data. In the model inference phase, the AI model trained in the model training phase is used to perform inference based on the inference data provided by the data source to obtain an inference result. This phase may also be understood as inputting the inference data into the AI model to obtain an output by using the AI model. The output is the inference result. The inference result may indicate a configuration parameter used (executed) by an execution object, and/or an operation performed by the execution object. The inference result is released in the inference result application phase. For example, the inference result may be centrally planned by an actor (actor) entity. For example, the actor entity may send the inference result to one or more execution objects (for example, access network devices or terminal devices) for execution. For another example, the actor entity may further feed back performance of the model to the data source, to facilitate subsequent update training of the model.

It may be understood that the communication system may include a network element having an artificial intelligence function. The foregoing phases related to the AI model design may be performed by one or more network elements having the artificial intelligence function. In a possible design, the AI function (for example, an AI module or an AI entity) may be configured in an existing network element in the communication system to implement an AI-related operation, for example, AI model training and/or inference. For example, the existing network element may be an access network device, a terminal device, or the like. Alternatively, in another possible design, an independent network element may be introduced into the communication system to perform an AI-related operation, for example, AI model training. The independent network element may be referred to as an AI network element (or an AI node or an AI entity) or the like. The name is not limited in embodiments of this application. For example, the AI network element may be directly connected to the access network device in the communication system, or may be indirectly connected to the access network device through a third-party network element. The third-party network element may be a network device such as an authentication management function (authentication management function, AMF) network element or a user plane function (user plane function, UPF) network element, an operation, administration, and maintenance (operation, administration, and maintenance, OAM), a server (for example, a cloud server), or another network element. This is not limited. For example, the independent AI network element may be deployed on one or more of an access network device side, a terminal device side, or a core network side. Optionally, the independent AI network element may be deployed on a server, for example, a cloud server or an over the top (over the top, OTT) device. For example, the independent AI network element is the AI network element 240 in the communication system shown in FIG. 2.

Training processes of different models may be deployed on different devices or nodes, or may be deployed on a same device or node. Inference processes of different models may be deployed on different devices or nodes, or may be deployed on a same device or node. A model training phase being completed by the terminal device is used as an example. After training the encoder and the decoder that are paired, the terminal device may send a model parameter of the decoder to the network device. A model training phase being completed by the network device is used as an example. After training the encoder and the decoder that are paired, the network device may indicate a model parameter of the encoder to the terminal device. A model training phase being completed by the independent AI network element is used as an example. After training the encoder and the decoder that are paired, the AI network element may send a model parameter of the encoder to the terminal device, and send a model parameter of the decoder to the network device. Then a model inference phase corresponding to the encoder is performed on the terminal device, and a model inference phase corresponding to the decoder is performed on the network device.

The model parameter may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It may be understood that the input dimension may be a size of one piece of input data, where for example, when the input data is one sequence, an input dimension corresponding to the sequence may indicate a length of the sequence; and the quantity of input ports may be an amount of input data. Similarly, the output dimension may be a size of one piece of output data, where for example, when the output data is one sequence, an output dimension corresponding to the sequence may indicate a length of the sequence; and the quantity of output ports may be an amount of output data.

### (7) Channel information

In the communication system (for example, an LTE communication system or an NR communication system), the network device needs to determine, based on the channel information, configurations such as a resource, an MCS, and precoding for scheduling a downlink data channel of the terminal device. It may be understood that the channel information can reflect a channel feature, channel quality, or the like. The channel information may also be referred to as channel state information (channel state information, CSI) or channel environment information. It may be understood that the CSI in this application is not limited to conventional CSI, for example, one or more of a channel quality indicator (channel quality indication, CQI), a precoding matrix indicator (precoding matrix indicator, PMI), a rank indicator (rank indicator, RI), or a CSI-RS resource indicator (CSI-RS resource indicator, CRI), or may be channel response information, for example, one or more of a channel response matrix, a reference signal received power (reference signal received power, RSRP), or a signal to interference plus noise ratio (signal to interference plus noise ratio, SINR).

CSI measurement means that a receive end obtains channel information based on a reference signal sent by a transmit end, that is, estimates the channel information by using a channel estimation method. For example, the reference signal may include at least one of the following: a channel state information reference signal (channel state information reference signal, CSI-RS), a synchronization signal/physical broadcast channel block (synchronization signal/physical broadcast channel block, SSB), a channel sounding reference signal (sounding reference signal, SRS), or a demodulation reference signal (demodulation reference signal, DMRS). The CSI-RS, the SSB, the DMRS, and the like may be used to measure downlink CSI, and the SRS, the DMRS, and the like may be used to measure uplink CSI.

In an FDD communication scenario, an uplink channel and a downlink channel are not reciprocal, in other words, reciprocity between the uplink channel and the downlink channel cannot be ensured. Therefore, the network device usually sends a downlink reference signal to the terminal device, and the terminal device performs channel measurement or interference measurement based on the received downlink reference signal to estimate the downlink CSI. The terminal device generates a CSI report in a predefined-protocol manner or in a manner configured by the network device, and feeds back the CSI report to the network device, so that the network device obtains the downlink CSI.

For example, the CSI may include at least one of the following: a channel quality indicator (channel quality indication, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), a reference signal received power (reference signal received power, RSRP), a signal to interference plus noise ratio (signal to interference plus noise ratio, SINR), or the like. The signal to interference plus noise ratio may also be referred to as an SINR. The RI indicates a quantity of downlink transport layers recommended by the terminal device, the CQI indicates a modulation and coding scheme that can be supported by a current channel condition determined by the terminal device, the PMI indicates precoding recommended by the terminal device, and a quantity of precoding layers indicated by the PMI corresponds to the RI.

It should be understood that the RI, the CQI, the PMI, and the like that are indicated in the CSI report are merely recommended values of the terminal device. The network device may perform downlink transmission based on a part or all of information indicated in the CSI report. Alternatively, the network device may perform downlink transmission without referring to the information indicated in the CSI report.

For example, an AI technology is introduced into a wireless communication network, and an AI model-based CSI feedback manner is generated. The terminal device compresses and feeds back CSI by using the AI model, and the network device recovers the compressed CSI by using the AI model. During AI-based CSI feedback, the terminal device transmits one sequence (for example, a bit sequence). In comparison with a conventional CSI feedback manner, CSI overheads are reduced.

FIG. 3 is used as an example. In FIG. 3, the encoder may be referred to as a CSI generator, and the decoder may be referred to as a CSI reconstructor. For example, the encoder may be deployed on the terminal device, and the decoder may be deployed on the network device. The terminal device may generate CSI feedback information z based on CSI raw information V by using the encoder. The terminal device reports a CSI report, and the CSI report may include the CSI feedback information z. The network device may reconstruct CSI information by using the decoder, that is, obtain recovered CSI information V'.

The CSI raw information V may be obtained by the terminal device through CSI measurement. For example, the CSI raw information V may include a channel response of a downlink channel or an eigenvector matrix (a matrix including eigenvectors) of a downlink channel. The encoder processes the eigenvector matrix of the downlink channel to obtain the CSI feedback information z. In other words, performing a compression operation and/or a quantization operation on a feature matrix based on a codebook in a related solution is replaced with the operation of processing the feature matrix by the encoder to obtain the CSI feedback information z. The terminal device reports the CSI feedback information z. The network device processes the CSI feedback information z by using the decoder to obtain the recovered CSI information V'.

The following further describes examples of a training process and an inference process of the AI model in embodiments of this application.

Training data for training the AI model includes a training sample and a sample label. For example, the training sample is channel information determined by the terminal device, and the sample label is real channel information, namely, ground truth CSI. When the encoder and the decoder belong to a same auto-encoder, the training data may include only the training sample, in other words, the training sample is the sample label.

In the wireless communication field, the ground truth CSI may be understood as high-precision CSI. A specific training process includes: The model training node processes the channel information, namely, the training sample, by using the encoder to obtain the CSI feedback information; processes the feedback information by using the decoder to obtain the recovered channel information, namely, the recovered CSI information; calculates a difference between the recovered CSI information and the corresponding sample label, namely, a value of the loss function; and updates parameters of the encoder and the decoder based on the value of the loss function, so that a difference between the recovered channel information and the corresponding sample label is minimized, that is, the loss function is minimized. For example, the loss function may be a minimum mean square error (mean square error, MSE) or a cosine similarity. The foregoing operations may be repeated to obtain the encoder and the decoder that meet the target requirement. The model training node may be the terminal device, the network device, or another network element having an AI function in the communication system.

It should be understood that the foregoing example in which the AI model is used for CSI compression is merely used for description. During CSI feedback, alternatively, the AI model may be used in another scenario. For example, the AI model may be used for CSI prediction, to be specific, predicting channel information at one or more future moments based on channel information measured at one or more historical moments. A specific purpose of the AI model in the CSI feedback scenario is not limited in embodiments of this application.

Model identification is to enable the network device and the UE to have a common understanding of an AI model. Usually, the UE needs to perform model registration with the network device. To be specific, the UE notifies the network device that the UE has one AI model and notifies the network device of information such as a function, an application scenario, and a corresponding configuration of the AI model. The network device configures one model identifier (identifier, ID) for the UE. In this case, the UE and the network device have a consistent understanding of which AI model is indicated by the model ID. In a subsequent model management process, the model ID may indicate a specific model corresponding to the model ID.

Function identification is to enable the network device and the UE to have a common understanding of an AI function. The AI function usually is not specifically a specific AI model, but a type of AI models having a same function. That is, the AI function may correspond to a plurality of AI models. Usually, the UE needs to report, to the network device, the information such as an AI function supported by the UE and an application scenario and a corresponding configuration of each AI function. The network device may configure one AI function ID for the UE. In this case, the UE and the network device have a consistent understanding of which AI function is indicated by the function ID. In a subsequent AI function management process, the function ID may indicate a specific AI function corresponding to the function ID. Alternatively, the network device may manage the AI function by using an application scenario and/or a corresponding configuration corresponding to the AI function.

It is found through research that when a two-sided model is selected for CSI feedback by using a model ID or a function ID, network performance corresponding to a same AI model or AI function at some moments is poor, failing to achieve good CSI feedback performance.

Based on this, embodiments of this application provide a communication method and a communication apparatus, to select and match a model or a function by taking interference signal strength into consideration, to improve CSI feedback performance.

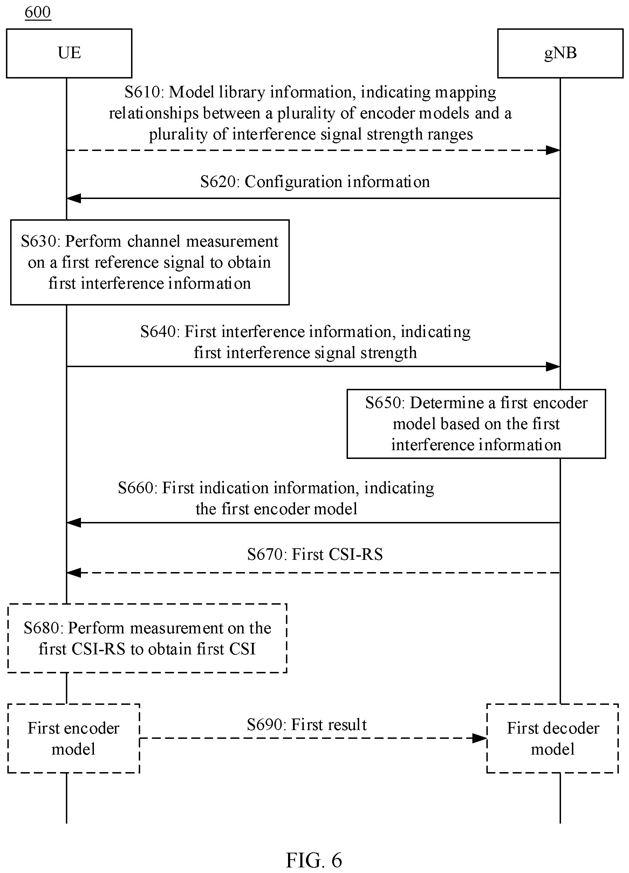

The following describes in detail the communication method provided in embodiments of this application with reference to the accompanying drawings. Embodiments provided in this application may be applied to the communication system shown in FIG. 1 or FIG. 2. This is not limited. This application provides the following methods shown in FIG. 5 to FIG. 9. It should be understood that method embodiments shown in FIG. 5 to FIG. 9 may be combined with each other, and steps in the method embodiments shown in FIG. 5 to FIG. 9 may be mutually referenced. In embodiments of this application, the method embodiments shown in FIG. 6 to FIG. 9 may be considered as possible implementations of implementing functions of the method embodiment shown in FIG. 5.

FIG. 5 is a schematic flowchart of a communication method 500 according to an embodiment of this application. As shown in FIG. 5, the method procedure may be performed by a first apparatus and a second apparatus. The first apparatus or the second apparatus may be a terminal device or a network device, or a chip, a chip system, a circuit, or the like in a terminal device or a network device, or a functional module/component or the like that can invoke and execute a program in a terminal device or a network device. Optionally, the first apparatus or the second apparatus may also be an AI entity (also referred to as an AI network element), for example, a model training network element, a model storage network element, or a model inference network element such as an OAM, an OTT, or a cloud server. For ease of description, in this embodiment of this application, the first apparatus being the terminal device and the second apparatus being the network device (Case 1) or the first apparatus being the network device and the second apparatus being the terminal device (Case 2) is separately used as an example for description. The method includes the following plurality of steps.

Case 1: The first apparatus is the terminal device, and the second apparatus is the network device.

S510: The second apparatus obtains first interference signal strength.

For example, the first interference signal strength may be represented by using first interference information. For example, the first interference signal strength may be represented by using an interference power value, with a unit of decibel relative to one milliwatt (decibel relative to one milliwatt, dBm), or the first interference signal strength may be represented by using a signal to interference plus noise ratio SINR value, with a unit of decibel (decibel, dB). In this application, the first interference information may be a specific interference power value, for example, 8 dBm, or the first interference information may be a specific SINR value, for example, 8 dB. Therefore, unless otherwise specified, the first interference information in this embodiment of this application may be replaced with a first interference power value or a first SINR value. Optionally, the first interference information may also be represented by using a signal to interference plus noise ratio (Signal to Interference plus Noise Ratio, SINR), which is an SINR for short and indicates a ratio of strength of a wanted signal to strength of an interference signal (noise and interference), namely, an interference level.

In a first example, the second apparatus obtains the first interference signal strength from the first apparatus. For example, the first apparatus sends the first interference information to the second apparatus, where the first interference information represents the first interference signal strength. Correspondingly, the second apparatus receives the first interference information from the first apparatus.

It should be understood that sending, by the first apparatus, the first interference information to the second apparatus may be that the first apparatus sends the first interference information to the second apparatus, or may be that the first apparatus sends, to the second apparatus, identifier or index information corresponding to the first interference information. A manner of sending the first interference information is not specifically limited in this application, provided that the second apparatus can obtain the first interference signal strength.

Optionally, before the second apparatus receives the first interference information from the first apparatus, or before the first apparatus sends the first interference information to the second apparatus, the method further includes: The second apparatus sends configuration information to the first apparatus, where the configuration information indicates a first reference signal. Correspondingly, the first apparatus receives the configuration information from the second apparatus, and performs channel measurement on the first reference signal to obtain a channel measurement result, where the channel measurement result includes the first interference information, that is, the first interference information is obtained by performing channel measurement on the first reference signal.

For example, the configuration information may include one or more of the following: a CSI resource configuration ID (CSI-ResourceConfigId), a CSI-RS resource set list (CSI-RS-ResourceSetList), or a CSI measurement time-domain behavior (resourceType).

For example, the first reference signal includes one or more of the following:
(1) channel state information reference signal CSI-RS, where
   for example, the CSI-RS is used for downlink channel estimation or measurement to obtain CSI, for example, an RI, a CQI, or a PMI;
(2) zero power channel state information reference signal (Zero Power Channel State Information reference signal, ZP CSI-RS), where
   it should be understood that a gNB does not send a CSI-RS on a resource configured for the ZP CSI-RS, and a power is 0; and
(3) channel state information interference measurement (Channel State Information Interference Measurement, CSI-IM) signal.

For example, in a multiple-input multiple-output (multiple-input multiple-output, MIMO) system, a resource specially used to estimate interference signal strength is defined, and is referred to as CSI-IM. The CSI-IM is not a downlink reference signal and is used for interference measurement. A serving base station does not send any signal on a resource configured for the CSI-IM, and an interference signal measured by a UE on the CSI-IM is from a neighboring cell or noise floor. For example, the UE collects statistics on received interference and noise strength, and calculates a signal to interference plus noise ratio SINR based on the statistics, to determine a block error rate (block error rate, BLER) corresponding to the SINR; and subject to BLER<10%, the UE reports a corresponding CQI.

In a second example, the second apparatus may locally obtain the first interference signal strength. For example, the second apparatus may obtain the first interference information through local retrieval or prediction; or the second apparatus may obtain the first interference information through cloud retrieval or prediction, where the first interference information indicates the first interference signal strength.

The local retrieval or prediction may mean that the second apparatus outputs an analysis result in a specification-defined form through artificial intelligence and big data analysis. The output analysis result generally includes two forms: statistical analysis of historical data and prediction of future data.

Retrieval means that the second apparatus may search for stored interference information at a corresponding time point in a past time period by using locally recorded historical data, and the interference information is equivalent to current interference information, namely, the first interference information. For example, interference information at 10:00 a.m. on January 1, 2023 may be equivalent to interference information at 10:00 a.m. on January 1, 2022. For example, the interference information stored herein may be locally stored on the network device, or may be non-locally stored, for example, stored in a core network, an ORAN, or a cloud.

Prediction means that the second apparatus may predict interference the second apparatus experiences, thereby obtaining a predicted value of the interference information. A method for performing prediction may be that the second apparatus performs prediction by using a neural network trained through artificial intelligence. Training data used in the training process may be related data of interference information previously collected by the network device, or may be related data of prediction performed by the second apparatus by using a prediction function obtained through big data analysis and fitting, where fitted data may be the related data of the interference information previously collected by the network device. Alternatively, the second apparatus may predict a service load amount of the second apparatus to obtain a predicted value of the service load amount, and then determine and predict, based on service load, the predicted value of the interference information. It should be understood that high service load indicates strong interference, and low service load indicates weak interference. For example, the network element used for prediction herein may be the network device, for example, a core network device, an ORAN device, or a cloud device.

S520: The second apparatus sends first indication information to the first apparatus. Correspondingly, the first apparatus receives the first indication information from the second apparatus.

The first indication information indicates a first encoder model or a first encoder function, and the first encoder model or the first encoder function is used to perform compression or quantization processing on CSI. That is, the second apparatus may obtain the first encoder model or the first encoder function by using the first indication information, to determine a first decoder. In other words, the first indication information may indicate a first encoder, or the first indication information may indicate the first decoder. That is, in this application, "indicating... encoder..." may be replaced with "indicating... decoder...".

It should be noted that the first encoder corresponds to the first decoder. Specifically, the first encoder model corresponds to a first decoder model, or the first encoder function corresponds to a first decoder function. In this case, a model corresponding to the first encoder function corresponds to a model corresponding to the first decoder function. It should be understood that the first encoder model and the first decoder model are usually jointly trained and may be used in a matching manner. The first encoder model and the first decoder model that are used in a matching manner include a same quantity of AI models, with a one-to-one correspondence between them, and the first encoder model and the first decoder model may be understood as paired AI models. The first encoder model may be an encoder used to compress the CSI, and the first decoder model may be a decoder used to recover the compressed CSI.

For example, the first encoder function includes one or more first encoder models. It should be understood that an AI function usually is not specifically a specific AI model, but a type of AI models having a same function. That is, the AI function may correspond to a plurality of AI models. In other words, the first encoder function may correspond to one or more first encoder models having a same function, and then the first apparatus and the second apparatus may determine the one or more first encoder models by using the first encoder function.

For example, the first indication information includes an identifier of the first encoder model and/or a model parameter of the first encoder model; or the first indication information includes an identifier of the first encoder function and/or a parameter of a model corresponding to the first encoder function.

The identifier of the first encoder model may be a model ID, the identifier of the first encoder function may be a function ID, and the model parameter of the first encoder model or the parameter of the model corresponding to the first encoder function may include one or more of the following:
(1) structure parameter of the model, where
   for example, the structure parameter of the model includes at least one of the following: a quantity of layers of the neural network, a width of the neural network, a weight of a neuron, a parameter in an activation function of a neuron, or the like;
(2) input parameter of the model, where
   for example, the input parameter of the model includes an input dimension and/or a quantity of input ports; and it may be understood that the input dimension may be a size of one piece of input data, where for example, when the input data is one sequence, an input dimension corresponding to the sequence may indicate a length of the sequence; and the quantity of input ports may be an amount of input data; and
(3) output parameter of the model, where
   for example, the output parameter of the model includes an output dimension and/or a quantity of output ports; and it may be understood that the output dimension may be a size of one piece of output data, where for example, when the output data is one sequence, an output dimension corresponding to the sequence may indicate a length of the sequence; and the quantity of output ports may be an amount of output data.

Optionally, before performing step S520, the second apparatus obtains model library information.

The model library information indicates mapping relationships between a plurality of encoder models and a plurality of interference signal strength ranges, and the first encoder model belongs to the plurality of encoder models; or the model library information indicates mapping relationships between a plurality of encoder functions and a plurality of interference signal strength ranges, the first encoder function belongs to the plurality of encoder functions, and the first interference signal strength is included in one of the plurality of interference signal strength ranges.

In an example, the second apparatus obtains the model library information from the first apparatus. For example, the first apparatus sends the model library information to the second apparatus. Correspondingly, the second apparatus receives the model library information from the first apparatus. Optionally, the second apparatus may also obtain the model library information from a model training network element, a model storage network element, or a model inference network element such as an OTT or a cloud server. A specific implementation in which the second apparatus obtains the model library information is not limited in this application.

In this application, that the first encoder model or the first encoder function is related to the first interference signal strength may be understood as follows: The first encoder model or the first encoder function is determined based on the first interference signal strength. For example, after determining the first interference signal strength in step S510, the second apparatus may determine, based on the model library information, the first encoder model corresponding to the first interference signal strength; or after determining the first interference signal strength in step S510, the second apparatus may determine, based on the model library information, the first encoder function corresponding to the first interference signal strength.

In this application, the mapping relationships between the plurality of encoder models and the plurality of interference signal strength ranges or the mapping relationships between the plurality of encoder functions and the plurality of interference signal strength ranges may be predefined, or may be signaling-configured or preconfigured. Predefinition may include predefinition, for example, protocol-definition, and preconfiguration may be implemented by prestoring corresponding code, a corresponding table, or a corresponding character string in a device or in another manner that may indicate related information. A specific implementation of predefinition or preconfiguration is not limited in this application.

Optionally, the mapping relationship may exist, for example, may be stored or transmitted, in a form of a table, a function, a text, or a character string.

In this application, the interference signal strength may be represented by using an interference power value and/or an SINR value. It should be understood that a larger interference power value indicates stronger signal interference, and a smaller interference power value indicates weaker signal interference; and a smaller SINR value indicates stronger signal interference, and a larger SINR value indicates weaker signal interference. Optionally, the interference signal strength may also be represented by using another parameter. This is not limited in this application.

The following provides, in the form of a table, an example of the mapping relationship, between the plurality of encoder models and the plurality of interference signal strength ranges, indicated by the model library information. Different interference signal strength ranges correspond to different encoder models, as shown in Table 1.

**Table 1**

| Encoder model | Interference signal strength range |
|---|---|
| AI CSI feedback encoder model #1 | Interference power range: -20 dBm≤x<-10 dBm |
| AI CSI feedback encoder model #2 | Interference power range: -10 dBm≤x<0 dBm |
| AI CSI feedback encoder model #3 | Interference power range: 0 dBm≤x<5 dBm |
| AI CSI feedback encoder model #4 | Interference power range: 5 dBm≤x<10 dBm |
| AI CSI feedback encoder model #5 | Interference power range: 10 dBm≤x<15 dBm |
| AI CSI feedback encoder model #6 | SINR range: -20 dB≤x<-10 dB |
| AI CSI feedback encoder model #7 | SINR range: -10 dB≤x<0 dB |
| AI CSI feedback encoder model #8 | SINR range: 0 dB≤x<5 dB |
| AI CSI feedback encoder model #9 | SINR range: 5 dB≤x<10 dB |

It may be learned from Table 1 that the encoder models include the AI CSI feedback encoder model #1, the AI CSI feedback encoder model #2, ..., the AI CSI feedback encoder model #8, and the AI CSI feedback encoder model #9. Interference signal strength corresponding to the AI CSI feedback encoder model #1 to the AI CSI feedback encoder model #5 is represented by using interference power values, and interference power ranges corresponding to the AI CSI feedback encoder model #1 to the AI CSI feedback encoder model #5 are -20 dBm≤x<-10 dBm, -10 dBm≤x<0 dBm, 0 dBm≤x<5 dBm, 5 dBm≤x<10 dBm, and 10 dBm≤x<15 dBm respectively. Interference signal strength corresponding to the AI CSI feedback encoder model #6 to the AI CSI feedback encoder model #9 is represented by using SINR values, and corresponding SINR ranges are -20 dB≤x<-10 dB, -10 dB≤x<0 dB, 0 dB≤x<5 dB, and 5 dB≤x<10 dB respectively.

For example, assuming that the first interference signal strength obtained by the second apparatus in step S510 is 12 dBm, it indicates that the first interference signal strength belongs to the interference power range of 10 dBm≤x<15 dBm. Correspondingly, it may be determined that the first encoder model is the AI CSI feedback encoder model #5, and then the second apparatus may include a model ID and/or a model parameter of the AI CSI feedback encoder model #5 in the first indication information, to indicate the AI CSI feedback encoder model #5. For another example, assuming that the first interference signal strength obtained by the second apparatus in step S510 is 4 dB, it indicates that the first interference signal strength belongs to the SINR range of 0 dB≤x<5 dB. Correspondingly, it may be determined that the first encoder model is the AI CSI feedback encoder model #8, and then the second apparatus may include a model ID and/or a model parameter of the AI CSI feedback encoder model #8 in the first indication information, to indicate the AI CSI feedback encoder model #8.

It should be noted that Table 1 is merely an example provided for ease of understanding, and does not constitute a limitation on the technical solutions of this application.

Optionally, a quantity of encoder models (for example, AI CSI feedback encoder models) in Table 1 is not limited in this application. In other words, a quantity of correspondences (for example, rows in the table) between the encoder models and the interference signal strength ranges in Table 1 is not limited in this application.

For example, the AI CSI feedback encoder model #1 to the AI CSI feedback encoder model #5, and the AI CSI feedback encoder model #6 to the AI CSI feedback encoder model #9 in Table 1 may be respectively formed into new independent tables. For another example, the AI CSI feedback encoder model #1 to the AI CSI feedback encoder model #3, and the AI CSI feedback encoder model #4 and the AI CSI feedback encoder model #5 in Table 1 may be respectively formed into new independent tables. For still another example, the AI CSI feedback encoder model #6 and the AI CSI feedback encoder model #7, and the AI CSI feedback encoder model #8 and the AI CSI feedback encoder model #9 in Table 1 may be respectively formed into new independent tables. That is, Table 1 may be split into a plurality of other tables as examples. This is not limited in this application, and a splitting manner is not limited either.

Optionally, values of the interference signal strength ranges in Table 1 are not limited in this application. In other words, interval sizes corresponding to the interference signal strength ranges in Table 1 are not specifically limited in this application. Interval sizes corresponding to a plurality of interference signal strength ranges may be the same (equal intervals), or may be different (unequal intervals). The interval sizes corresponding to the interference signal strength ranges and specific value ranges may be predefined or preconfigured, or may be signaling-configured.

For example, in Table 1, interval sizes of the interference signal strength ranges corresponding to the AI CSI feedback encoder model #1 and the AI CSI feedback encoder model #2 are the same, namely, 10 dBm; interval sizes of the interference signal strength ranges corresponding to the AI CSI feedback encoder model #3, the AI CSI feedback encoder model #4, and the AI CSI feedback encoder model #5 are the same, namely, 5 dBm; interval sizes of the interference signal strength ranges corresponding to the AI CSI feedback encoder model #6 and the AI CSI feedback encoder model #7 are the same, namely 10 dB; interval sizes of the interference signal strength ranges corresponding to the AI CSI feedback encoder model #8 and the AI CSI feedback encoder model #9 are the same, namely, 5 dB; the interval sizes of the interference signal strength ranges corresponding to the AI CSI feedback encoder model #1 and the AI CSI feedback encoder model #3 are different; and the interval sizes of the interference signal strength ranges corresponding to the AI CSI feedback encoder model #7 and the AI CSI feedback encoder model #8 are different. This is not limited in this application.

Optionally, the interference power ranges corresponding to the AI CSI feedback encoder model #1 to the AI CSI feedback encoder model #5 in Table 1 may be replaced with a first range to a fifth range, the SINR ranges corresponding to the AI CSI feedback encoder model #6 to the AI CSI feedback encoder model #9 may be replaced with a sixth range to a ninth range, and so on. This is not limited in this application.

It should be noted that because the first encoder model matches the first decoder model, in other words, the plurality of first encoder models are in a one-to-one correspondence with a plurality of first decoder models, mapping relationships between a plurality of decoder models and a plurality of interference signal strength ranges may also be uniquely determined according to Table 1, as shown in Table 2 below.

**Table 2**

| Decoder model | Interference signal strength range |
|---|---|
| AI CSI feedback decoder model #1 | Interference power range: -20 dBm≤x<-10 dBm |
| AI CSI feedback decoder model #2 | Interference power range: -10 dBm≤x<0 dBm |
| AI CSI feedback decoder model #3 | Interference power range: 0 dBm≤x<5 dBm |
| AI CSI feedback decoder model #4 | Interference power range: 5 dBm≤x<10 dBm |
| AI CSI feedback decoder model #5 | Interference power range: 10 dBm≤x<15 dBm |
| AI CSI feedback decoder model #6 | SINR range: -20 dB≤x<-10 dB |
| AI CSI feedback decoder model #7 | SINR range: -10 dB≤x<0 dB |
| AI CSI feedback decoder model #8 | SINR range: 0 dB≤x<5 dB |
| AI CSI feedback decoder model #9 | SINR range: 5 dB≤x<10 dB |

It should be noted that Table 2 is merely an example provided for ease of understanding, and does not constitute a limitation on the technical solutions of this application. Optionally, Table 1 and Table 2 may be independently implemented, or may be implemented in combination. For example, Table 1 and Table 2 may be combined into one table. This is not limited in this application. For example, for a specific interference signal strength range, one or more rows in Table 1 and one or more corresponding rows in Table 2 may be presented in one table. For example, first five rows of mapping relationships in Table 1 and first five rows of mapping relationships in Table 2 may be combined into one table, and last four rows of mapping relationships in Table 1 and last four rows of mapping relationships in Table 2 may be combined into one table. This is not limited in this application.

Table 3 below shows an example of the mapping relationship, between the plurality of encoder functions and the plurality of interference signal strength ranges, indicated by the model library information. Different interference signal strength ranges correspond to different encoder functions.

**Table 3**

| Encoder function | Interference signal strength range |
|---|---|
| AI CSI feedback encoder function #1 | Interference power range: -20 dBm≤x<-10 dBm |
| AI CSI feedback encoder function #2 | Interference power range: -10 dBm≤x<0 dBm |
| AI CSI feedback encoder function #3 | Interference power range: 0 dBm≤x<5 dBm |
| AI CSI feedback encoder function #4 | Interference power range: 5 dBm≤x<10 dBm |
| AI CSI feedback encoder function #5 | SINR range: -20 dB≤x<-10 dB |
| AI CSI feedback encoder function #6 | SINR range: -10 dB≤x<0 dB |
| AI CSI feedback encoder function #7 | SINR range: 0 dB≤x<5 dB |
| AI CSI feedback encoder function #8 | SINR range: 5 dB≤x<10 dB |
| AI CSI feedback encoder function #9 | SINR range: 10 dB≤x<20 dB |

It may be learned from Table 3 that the encoder functions include the AI CSI feedback encoder function #1, the AI CSI feedback encoder function #2, ..., the AI CSI feedback encoder function #8, and the AI CSI feedback encoder function #9. Interference signal strength corresponding to the AI CSI feedback encoder function #1 to the AI CSI feedback encoder function #4 is represented by using interference power values, and interference power ranges corresponding to the AI CSI feedback encoder function #1 to the AI CSI feedback encoder function #4 are -20 dBm≤x<-10 dBm, -10 dBm≤x<0 dBm, 0 dBm≤x<5 dBm, and 5 dBm≤x<10 dBm respectively. Interference signal strength corresponding to the AI CSI feedback encoder function #5 to the AI CSI feedback encoder function #9 is represented by using SINR values, and corresponding SINR ranges are -20 dB≤x<-10 dB, -10 dB≤x<0 dB, 0 dB≤x<5 dB, 5 dB≤x<10 dB, and 10 dB≤x<20 dB respectively.

For example, assuming that the first interference signal strength obtained by the second apparatus in step S510 is 6 dBm, it indicates that the first interference signal strength belongs to the interference power range of 5 dBm≤x<10 dBm. Correspondingly, it may be determined that the first encoder function is the AI CSI feedback encoder function #4, and then the second apparatus may include, in the first indication information, a function ID of the AI CSI feedback encoder function #4 and/or a parameter of a model corresponding to the AI CSI feedback encoder function #4, to indicate the AI CSI feedback encoder function #4. For another example, assuming that the first interference signal strength obtained by the second apparatus in step S510 is 8 dB, it indicates that the first interference signal strength belongs to the SINR range of 5 dB≤x<10 dB. Correspondingly, it may be determined that the first encoder function is the AI CSI feedback encoder function #8, and then the second apparatus may include a model ID and/or a parameter of a model of the AI CSI feedback encoder function #8 in the first indication information, to indicate the AI CSI feedback encoder function #8.

It should be noted that Table 3 is merely an example provided for ease of understanding, and does not constitute a limitation on the technical solutions of this application.

Optionally, a quantity of encoder functions (for example, AI CSI feedback encoder functions) in Table 3 is not limited in this application. In other words, a quantity of correspondences (for example, rows in the table) between the encoder functions and the interference signal strength ranges in Table 3 is not limited in this application.

For example, the AI CSI feedback encoder function #1 to the AI CSI feedback encoder function #4, and the AI CSI feedback encoder function #5 to the AI CSI feedback encoder function #9 in Table 3 may be respectively formed into new independent tables. Alternatively, the AI CSI feedback encoder function #1 and the AI CSI feedback encoder function #2 in Table 3, and the AI CSI feedback encoder function #3 and the AI CSI feedback encoder function #4 in Table 3 may be respectively formed into new independent tables. Alternatively, the AI CSI feedback encoder function #5 to the AI CSI feedback encoder function #7, and the AI CSI feedback encoder function #8 and the AI CSI feedback encoder function #9 in Table 3 may be respectively formed into new independent tables. That is, Table 3 may be split into a plurality of other tables as examples. This is not limited in this application, and a splitting manner is not limited either.

Optionally, values of the interference signal strength ranges in Table 3 are not limited in this application. In other words, interval sizes corresponding to the interference signal strength ranges in Table 3 are not specifically limited in this application. Interval sizes corresponding to a plurality of interference signal strength ranges may be the same (equal intervals), or may be different (unequal intervals). The interval sizes corresponding to the interference signal strength ranges and specific value ranges may be predefined or preconfigured, or may be signaling-configured.

For example, in Table 3, interval sizes of the interference signal strength ranges corresponding to the AI CSI feedback encoder function #1 and the AI CSI feedback encoder function #2 are the same, namely, 10 dBm; interval sizes of the interference signal strength ranges corresponding to the AI CSI feedback encoder function #3 and the AI CSI feedback encoder function #4 are the same, namely, 5 dBm; interval sizes of the interference signal strength ranges corresponding to the AI CSI feedback encoder function #1 and the AI CSI feedback encoder function #3 are different; interval sizes of the interference signal strength ranges corresponding to the AI CSI feedback encoder function #5, the AI CSI feedback encoder function #6, and the AI CSI feedback encoder function #9 are the same, namely, 10 dB; interval sizes of the interference signal strength ranges corresponding to the AI CSI feedback encoder function #7 and the AI CSI feedback encoder function #8 are the same, namely, 5 dB; interval sizes of the interference signal strength ranges corresponding to the AI CSI feedback encoder function #1 and the AI CSI feedback encoder function #4 are different; and interval sizes of the interference signal strength ranges corresponding to the AI CSI feedback encoder function #6 and the AI CSI feedback encoder function #8 are different. This is not limited in this application.

Optionally, each AI CSI feedback encoder function may include one or more AI CSI feedback encoder models.

Optionally, the interference power ranges corresponding to the AI CSI feedback encoder function #1 to the AI CSI feedback encoder function #4 in Table 3 may be replaced with a first range to a fourth range, the SINR ranges corresponding to the AI CSI feedback encoder function #5 to the AI CSI feedback encoder function #9 may be replaced with a fifth range to a ninth range, and so on. This is not limited in this application.

It should be noted that because the first encoder function matches the first decoder function, in other words, the plurality of first encoder functions are in a one-to-one correspondence with a plurality of first decoder functions, mapping relationships between a plurality of decoder functions and a plurality of interference signal strength ranges may also be uniquely determined according to Table 3, as shown in Table 4 below.

**Table 4**

| Decoder function | Interference signal strength range |
|---|---|
| AI CSI feedback decoder function #1 | Interference power range: -20 dBm≤x<-10 dBm |
| AI CSI feedback decoder function #2 | Interference power range: -10 dBm≤x<0 dBm |
| AI CSI feedback decoder function #3 | Interference power range: 0 dBm≤x<5 dBm |
| AI CSI feedback decoder function #4 | Interference power range: 5 dBm≤x<10 dBm |
| AI CSI feedback decoder function #5 | SINR range: -20 dB≤x<-10 dB |
| AI CSI feedback decoder function #6 | SINR range: -10 dB≤x<0 dB |
| AI CSI feedback decoder function #7 | SINR range: 0 dB≤x<5 dB |
| AI CSI feedback decoder function #8 | SINR range: 5 dB≤x<10 dB |
| AI CSI feedback decoder function #9 | SINR range: 10 dB≤x<20 dB |

It should be noted that Table 4 is merely an example provided for ease of understanding, and does not constitute a limitation on the technical solutions of this application. Optionally, Table 34 and Table 4 may be independently implemented, or may be implemented in combination. For example, Table 3 and Table 4 may be combined into one table. This is not limited in this application. For example, for a specific interference signal strength range, one or more rows in Table 3 and one or more corresponding rows in Table 4 may be presented in one table. For example, first four rows of mapping relationships in Table 3 and first four rows of mapping relationships in Table 4 may be combined into one table, and last five rows of mapping relationships in Table 3 and last five rows of mapping relationships in Table 4 may be combined into one table. This is not limited in this application.

Optionally, the mapping relationships between the plurality of encoder models and the plurality of interference signal strength ranges shown in Table 1 and the mapping relationships between the plurality of encoder functions and the plurality of interference signal strength ranges shown in Table 3 may be independently implemented, or may be implemented in combination. In other words, Table 1 and Table 3 may be combined into one table. This is not limited in this application. For example, for a specific interference signal strength range, one or more rows in Table 1 and one or more corresponding rows in Table 3 may be presented in one table. For example, first four rows of mapping relationships in Table 1 and first four rows of mapping relationships in Table 3 may be combined into one table.

Similarly, the mapping relationships between the plurality of decoder models and the plurality of interference signal strength ranges shown in Table 3 and the mapping relationships between the plurality of decoder functions and the plurality of interference signal strength ranges shown in Table 4 may be independently implemented, or may be implemented in combination. In other words, Table 3 and Table 4 may be combined into one table. This is not limited in this application. For example, for a specific interference signal strength range, one or more rows in Table 3 and one or more corresponding rows in Table 4 may be presented in one table. For example, first four rows of mapping relationships in Table 3 and first four rows of mapping relationships in Table 4 may be combined into one table. This is not limited in this application.

For example, assuming that the first interference signal strength obtained by the second apparatus in step S510 is -8 dBm, and it may be learned from the model library information shown in Table 1 or Table 3 that the first interference signal strength belongs to the interference power range of -10 dBm≤x<0 dBm, the second apparatus may determine that the first encoder model is the AI CSI feedback encoder model #2, or the second apparatus may determine that the first encoder function is the AI CSI feedback encoder function #2. Further, in step S520, the second apparatus may indicate the first encoder model or the first encoder function by using the first indication information. For example, the second apparatus may include one or more items of a model ID of the AI CSI feedback encoder model #2 or a function ID of the AI CSI feedback encoder function #2 in the first indication information, to respectively indicate the AI CSI feedback encoder model #2 and the AI CSI feedback encoder function #2. Alternatively, the second apparatus may also include, in the first indication information, one or more items of model parameters of the AI CSI feedback encoder model #2 or parameters of a model corresponding to the AI CSI feedback encoder function #2, to respectively indicate the AI CSI feedback encoder model #2 and the AI CSI feedback encoder function #2.

In other words, the second apparatus may determine, based on the first interference signal strength obtained in step S510 and the model library information, the first encoder model or the first encoder function corresponding to the first interference signal strength, and indicate the first encoder model or the first encoder function to the first apparatus by using the first indication information. Subsequently, the first apparatus may feed back the CSI to the second apparatus based on the first encoder model or the model corresponding to the first encoder function.

Optionally, for Table 1 to Table 4 above, the mapping relationship between the encoder model and/or the encoder function and the interference signal strength range shown in Table 1 and/or Table 2 may be understood as model library information on a terminal device side, and may be used to determine the first encoder model and/or the first encoder function based on the first interference information (or the first interference signal strength); and the mapping relationship between the decoder model and/or the decoder function and the interference signal strength range shown in Table 3 and/or Table 4 may be understood as model library information on a network device side, and may be used to determine the first decoder model and/or the first decoder function based on the first interference information (or the first interference signal strength).

Based on steps S510 and S520, the first apparatus and the second apparatus have selected or matched a two-sided model or function related to the first interference signal strength, for example, the first encoder model and the first decoder model (which may be a two-sided model for short), or the first encoder function or the first decoder function (where the model corresponding to the first encoder function and the model corresponding to the first decoder function may also be a two-sided model for short). Optionally, the first apparatus may perform CSI feedback to the second apparatus based on the two-sided model.

Based on steps S510 and S520, after the first apparatus and the second apparatus complete selection or matching of the two-sided model, the first apparatus and the second apparatus may perform CSI feedback based on the two-sided model, thereby improving CSI feedback performance.

For example, the second apparatus sends a first CSI-RS to the first apparatus. Correspondingly, the first apparatus receives the first CSI-RS from the second apparatus, and performs channel measurement on the first CSI-RS to obtain first CSI. Then, the first apparatus may perform compression and quantization processing on the first CSI by using the determined first encoder model or the determined model corresponding to the first encoder function to obtain feedback CSI (namely, a first result), and send the feedback CSI to the second apparatus. After receiving the feedback CSI from the first apparatus, the second apparatus may perform decompression and quantization processing on the feedback CSI by using the determined first decoder model or the determined model corresponding to the first decoder function to obtain recovered CSI (namely, a second result).

In other words, the first CSI may be used as an input of the first encoder model, and an output of the first encoder is the feedback CSI (namely, the first result). Correspondingly, the feedback CSI is used as an input of the first decoder, and an output of the first decoder is the recovered CSI (namely, the second result).

It should be understood that the first encoder model corresponds to the first decoder model, the first encoder model and the first decoder model are usually jointly trained and may be used in a matching manner, and the first encoder model and the first decoder model may be understood as paired AI models. Similarly, the first encoder function corresponds to the first decoder function. For specific explanations, refer to the foregoing related descriptions.

In this application, that the first CSI is related to the first interference signal strength may be understood as follows: After obtaining the first interference signal strength, the second apparatus may send the first CSI-RS in a first time period, so that the first apparatus measures the first CSI-RS to obtain the first CSI, and performs compression or quantization processing on the first CSI. The first time period needs to be as short as possible, for example, within 10 ms, to ensure that the first encoder model or the model corresponding to the first encoder function, both corresponding to the first interference signal strength, is applicable to performing compression or quantization processing on the first CSI, thereby improving CSI feedback performance.

Optionally, that the first CSI is related to the first interference signal strength may also be understood as follows: The first interference signal strength is obtained based on a measurement quantity of the first CSI-RS. For example, the first apparatus measures the measurement quantity of the first CSI-RS to obtain the first CSI, where the first CSI includes the first interference information, and the first interference information indicates the first interference signal strength.

Optionally, in this embodiment of this application, the first encoder model may be deployed on a first apparatus side, and the first decoder model may be deployed on a second apparatus side. For example, after obtaining the first CSI through measurement, the first apparatus performs compression processing on the first CSI by using the first encoder model to obtain the feedback CSI, and sends the feedback CSI to the second apparatus. Correspondingly, after obtaining the feedback CSI, the second apparatus performs decompression processing on the feedback CSI by using the first decoder model to obtain the recovered CSI, to improve CSI feedback performance.

Optionally, the first encoder model or the first decoder model in this embodiment of this application may also be deployed on a third apparatus side or a fourth apparatus side. A third apparatus or a fourth apparatus may be a model training network element, a model storage network element, or a model inference network element such as an OAM, an OTT, or a cloud server. For example, after obtaining the first CSI through measurement, the first apparatus may send the first CSI to the third apparatus, the third apparatus performs compression processing on the first CSI by using the first encoder model to obtain the feedback CSI, and sends the feedback CSI to the first apparatus, and then the first apparatus sends the feedback CSI to the second apparatus. Correspondingly, after obtaining the feedback CSI, the second apparatus may send the feedback CSI to the fourth apparatus, and the fourth apparatus performs decompression processing on the feedback CSI by using the first decoder model to obtain the recovered CSI, and sends the recovered CSI to the second apparatus, to improve CSI feedback performance.

Case 2: The first apparatus is the network device, and the second apparatus is the terminal device.

S510: The second apparatus obtains first interference signal strength.

For a meaning of the first interference signal strength, refer to the foregoing related descriptions. Details are not described herein again.

In a first example, the second apparatus obtains the first interference signal strength from the first apparatus. For example, the first apparatus sends configuration information to the second apparatus. Correspondingly, the second apparatus receives the configuration information from the first apparatus, and performs channel measurement on a first reference signal based on the configuration information to obtain a channel measurement result, where the channel measurement result includes first interference information, and the first interference information represents the first interference signal strength. That is, the first interference information is obtained by performing channel measurement on the first reference signal.

The configuration information indicates the first reference signal. The configuration information includes one or more of the following: a CSI resource configuration ID (CSI-ResourceConfigId), a CSI-RS resource set list (CSI-RS-ResourceSetList), or a CSI measurement time-domain behavior (resourceType). The first reference signal includes one or more of the following: a CSI-RS, a ZP CSI-RS, or CSI-IM signal. For explanations of the first reference signal and an association relationship between the first interference information and the first interference signal strength, refer to the foregoing related descriptions.

Optionally, that the second apparatus obtains the first interference signal strength from the first apparatus may be that the first apparatus actively indicates the first interference signal strength to the second apparatus, or may be that the first apparatus indicates the first interference signal strength to the second apparatus based on a request message of the second apparatus. For example, before performing step S510, the second apparatus sends the request message to the first apparatus, where the request message is used to request the first apparatus to send the configuration information. Correspondingly, after receiving the request message from the second apparatus, the first apparatus triggers sending of the configuration information to the second apparatus, so that the second apparatus performs channel measurement on the first reference signal based on the configuration information to obtain the first interference signal strength.

In a second example, the second apparatus may locally obtain the first interference signal strength. For example, the second apparatus may perform an interference prediction or sensing operation to obtain the first interference signal strength. For example, the second apparatus outputs an analysis result in a specification-defined form through artificial intelligence and big data analysis. For a specific implementation, refer to the foregoing related descriptions. Details are not described herein again.

According to the foregoing example, the second apparatus obtains the first interference signal strength. Optionally, the second apparatus may send the first interference information (or the first interference signal strength) to the first apparatus. Correspondingly, after receiving the first interference information (or the first interference signal strength) from the second apparatus, the first apparatus may learn that a first encoder model or a first encoder function indicated by the second apparatus in step S520 is associated with the first interference information (or the first interference signal strength). Further, the first apparatus may also determine a first decoder model that matches the first encoder model, or may determine a first decoder function that matches and corresponds to the first encoder function, for performing CSI feedback between the first apparatus and the second apparatus. For specific explanations of the association between the first encoder model or the first encoder function and the first interference information (or the first interference signal strength), refer to the foregoing related descriptions. Details are not described herein again.

S520: The second apparatus sends first indication information to the first apparatus. Correspondingly, the first apparatus receives the first indication information from the second apparatus.

The first indication information indicates the first encoder model or the first encoder function, and the first encoder model or the first encoder function is used to process CSI; or the first indication information may indicate a first encoder or a first decoder. For a specific meaning, refer to the foregoing related descriptions.

For example, the first indication information includes an identifier of the first encoder model and/or a model parameter of the first encoder model; or the first indication information includes an identifier of the first encoder function and/or a parameter of a model corresponding to the first encoder function. For specific explanations, refer to the foregoing related descriptions.

Optionally, before performing step S520, the second apparatus obtains model library information.

For a meaning of the model library information and a representation form of the model library information, refer to the foregoing related descriptions. Details are not described herein again.

For example, the second apparatus may obtain the model library information from the first apparatus, or the second apparatus may obtain the model library information from a model training network element, a model storage network element, or a model inference network element such as an OAM, an OTT, or a cloud server. For a specific implementation, refer to the foregoing related descriptions.

In this embodiment of this application, the first decoder model corresponds to the first encoder model, and the first decoder function corresponds to the first encoder function. For specific explanations, refer to the foregoing related descriptions. After performing step S520, the first apparatus may determine, based on the received first indication information, the first encoder model or the first encoder function selected by the second apparatus, so that the first decoder model that matches the first encoder model can be determined, or the first decoder function that matches and corresponds to the first encoder function can be determined. Optionally, the first apparatus may send second indication information to the second apparatus, where the second indication information indicates the first decoder model or the first encoder function that has been selected or matched by the first apparatus. In this case, the first apparatus and the second apparatus complete selection or matching of a two-sided model, and subsequently the first apparatus and the second apparatus may perform CSI feedback based on the two-sided model.

Based on steps S510 and S520, after the first apparatus and the second apparatus complete selection or matching of the two-sided model, the first apparatus and the second apparatus may perform CSI feedback based on the two-sided model, thereby improving CSI feedback performance.

In an example, the first apparatus sends a first CSI-RS to the second apparatus. Correspondingly, the second apparatus receives the first CSI-RS from the first apparatus, and performs channel measurement on the first CSI-RS to obtain first CSI. Then, the second apparatus may perform compression and quantization processing on the first CSI by using the determined first encoder model or the determined model corresponding to the first encoder function to obtain feedback CSI (namely, a first result), and send the feedback CSI to the second apparatus. After receiving the feedback CSI from the second apparatus, the first apparatus may perform decompression and quantization processing on the feedback CSI by using the determined first decoder model or the determined model corresponding to the first decoder function to obtain recovered CSI (namely, a second result).

In other words, the first CSI may be used as an input of the first encoder model, and an output of the first encoder is the feedback CSI (namely, the first result). Correspondingly, the feedback CSI is used as an input of the first decoder, and an output of the first decoder is the recovered CSI (namely, the second result).

In this application, the first CSI is related to the first interference signal strength. For specific explanations, refer to the foregoing related descriptions. Details are not described herein.

Optionally, the first encoder model in this embodiment of this application may be deployed on a first apparatus side, and the first decoder model may be deployed on a second apparatus side; or the first encoder model or the first decoder model may be deployed on a third apparatus side, and a third apparatus may be a model training network element, a model storage network element, or a model inference network element such as an OAM, an OTT, or a cloud server. This is not limited in this application.

In conclusion, the second apparatus obtains the first interference signal strength, and indicates, to the first apparatus by using the first indication information, the first encoder model or the first encoder function related to the first interference signal strength. In addition, the second apparatus determines the first decoder model that matches the first encoder model, or determines the first decoder function that matches the first encoder function, that is, selects or matches the two-sided model for CSI feedback by taking the first interference signal strength into consideration, to improve CSI feedback performance.

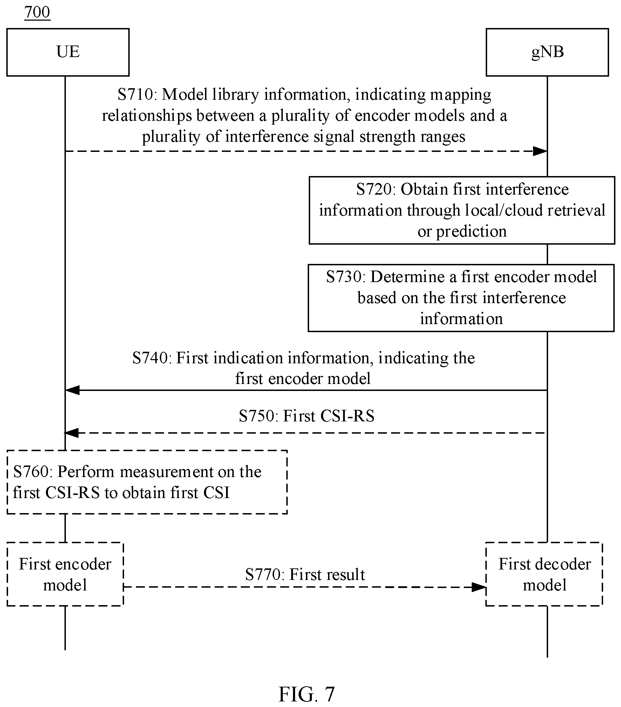

With reference to FIG. 6 and FIG. 7, an example in which the first apparatus is the terminal device and the second apparatus is the network device is used below to describe selection or matching, of the first encoder model, triggered by the second apparatus (for example, a gNB). FIG. 6 and FIG. 7 may be considered as further details of Case 1 in FIG. 5. The first interference information in FIG. 6 is obtained by the first apparatus (for example, a UE) by performing channel measurement on the first reference signal. In comparison, the first interference information in FIG. 7 is obtained by the second apparatus (for example, a gNB) through local/cloud retrieval or prediction, and the first encoder model is determined by obtaining the first interference information, to implement selection or matching of the first encoder model and the first decoder.

FIG. 6 is a schematic flowchart of a communication method 600 according to an embodiment of this application. As shown in FIG. 6, the method may be performed by a first apparatus (for example, a UE) and a second apparatus (for example, a gNB), and includes the following plurality of steps. Optionally, the first apparatus may also be a chip, a chip system, a circuit, or the like in a terminal device, or a functional module/component or the like that can invoke and execute a program in a terminal device; and the second apparatus may also be a chip, a chip system, a circuit, or the like in a network device, or a functional module/component that can invoke and execute a program or the like in a network device. Optionally, the first apparatus or the second apparatus may be an AI entity (also referred to as an AI network element) or a chip or a storage device used for an AI entity, for example, a model training network element, a model storage network element, or a model inference network element such as an OAM, an OTT, or a cloud server. This is not limited in this application. Optionally, the first apparatus may include a terminal device and an AI entity, and/or the second apparatus may include a network device and an AI entity. This is not limited herein.

S610: Optionally, the UE sends model library information to a gNB. Correspondingly, the gNB receives the model library information from the UE.

The model library information indicates mapping relationships between a plurality of encoder models and a plurality of interference signal strength ranges. For specific explanations, refer to the related descriptions in the foregoing method 500.

S620: The gNB sends configuration information to the UE. Correspondingly, the UE receives the configuration information from the gNB.

The configuration information indicates to perform channel measurement on a first reference signal. For specific explanations of the first reference signal and the configuration information and a specific implementation of the channel measurement, refer to the related descriptions in the foregoing method 500.

S630: The UE performs channel measurement on the first reference signal to obtain first interference information.

For example, the first interference information indicates first interference signal strength. For example, the first interference information may be a specific interference power value, for example, 8 dBm.

S640: The UE sends the first interference information to the gNB. Correspondingly, the gNB receives the first interference information from the UE.

S650: The gNB determines a first encoder model based on the first interference information.

Optionally, if step S610 is performed, it indicates that the gNB learns of the model library information of the UE. In this case, the gNB may determine current interference signal strength of the UE based on the received first interference information, and may determine the corresponding first encoder model based on the model library information obtained in step S610. For example, assuming that an interference power value reported by the UE is 8 dBm, the gNB may select the AI CSI feedback encoder model #3 (namely, the first encoder model) from Table 1 to perform subsequent CSI feedback.

Optionally, if step S610 is not performed, it indicates that the gNB does not learn of the model library information of the UE. In this case, the gNB may determine a corresponding first decoder model, for example, the AI CSI feedback decoder model #3, from the model library information of the gNB in Table 2 based on the received first interference information, and then determine the corresponding first encoder model (for example, the AI CSI feedback encoder model #3) based on a correspondence between the first encoder model and the first decoder model (that is, the two are a two-sided model). The correspondence between the first encoder model and the first decoder model may be predefined, or may be configured or preconfigured. This is not limited in this application.

For example, the AI CSI feedback encoder model #3 and the AI CSI feedback decoder model #3 may be respectively the encoder and the decoder shown in FIG. 3. For example, the AI CSI feedback encoder model #3 and the AI CSI feedback decoder model #3 in this embodiment of this application may be respectively used for CSI compression processing and CSI decompression processing.

S660: The gNB sends first indication information to the UE. Correspondingly, the UE receives the first indication information from the gNB.

The first indication information indicates the first encoder model, for example, the AI CSI feedback encoder model #3.

For example, the first indication information carries a model ID of the AI CSI feedback encoder model #3 and/or a model parameter of the AI CSI feedback encoder model #3. For specific explanations, refer to the related descriptions in the foregoing method 500. Further, after receiving the first indication information, the UE may select the AI CSI feedback encoder model #3 from a local model library based on the model ID of the AI CSI feedback encoder model #3 and/or the model parameter of the AI CSI feedback encoder model #3.

Optionally, the UE may send feedback information to the gNB, to indicate that the UE has successfully selected the AI CSI feedback encoder model #3. In other words, for an AI CSI feedback scenario, the UE and the gNB have identified and paired the two-sided model, for example, the AI CSI feedback encoder model #3 and the AI CSI feedback decoder model #3.

Based on the foregoing steps, after the UE and the gNB complete selection or matching of the two-sided model, the UE and the gNB may perform CSI feedback based on the two-sided model. For example, refer to steps S670 to S690 below.

S670: The gNB sends a first CSI-RS to the UE. Correspondingly, the UE receives the first CSI-RS from the gNB.

S680: The UE performs measurement on the first CSI-RS to obtain first CSI.

S690: The UE sends a first result to the gNB. Correspondingly, the gNB receives the first result from the UE.

In an example, the first encoder model is deployed on a UE side, and the first decoder model is deployed on a gNB side. In this case, the UE may perform, by using the first encoder model, compression processing on the first CSI obtained by measuring the first CSI-RS to obtain feedback CSI (namely, the first result), and send the first result to the gNB. Correspondingly, after receiving the first result, the gNB performs decompression processing on the first result by using the first decoder model to obtain recovered CSI (namely, a second result), to complete CSI feedback.

In another example, the first encoder model is deployed on a network element #1, and the first decoder model is deployed on a network element #2. In this case, the UE may send, to the network element #1, the first CSI obtained by measuring the first CSI-RS, and the network element #1 performs compression processing on the first CSI by using the first encoder model to obtain feedback CSI (namely, the first result), and sends the first result to the UE. Then, the UE sends the first result to the gNB. Correspondingly, after receiving the first result, the gNB sends the first result to the network element #2, and the network element #2 performs decompression processing on the first result by using the first decoder model to obtain recovered CSI (namely, a second result), and sends the second result to the gNB, to complete CSI feedback.

According to the foregoing solution, the gNB triggers a measurement procedure of the first interference information (or the first interference signal strength) to obtain the first interference information, determines the first encoder model based on the obtained first interference information, and indicates the first encoder model to the UE by sending the first indication information, to implement selection and pairing of the first encoder model and the first decoder model for CSI feedback. That is, the two-sided model is selected or matched by taking the first interference signal strength into consideration, to improve CSI feedback performance.

FIG. 7 is a schematic flowchart of a communication method 700 according to an embodiment of this application. As shown in FIG. 7, the method may be performed by a first apparatus (for example, a UE) and a second apparatus (for example, a gNB), and includes the following plurality of steps. Optionally, the first apparatus may also be a chip, a chip system, a circuit, or the like in a terminal device, or a functional module/component or the like that can invoke and execute a program in a terminal device; and the second apparatus may also be a chip, a chip system, a circuit, or the like in a network device, or a functional module/component that can invoke and execute a program or the like in a network device. Optionally, the first apparatus or the second apparatus may be an AI entity (also referred to as an AI network element) or a chip or a storage device used for an AI entity, for example, a model training network element, a model storage network element, or a model inference network element such as an OAM, an OTT, or a cloud server. This is not limited in this application. Optionally, the first apparatus may include a terminal device and an AI entity, and/or the second apparatus may include a network device and an AI entity. This is not limited herein.

S710: Optionally, the UE sends model library information to a gNB. Correspondingly, the gNB receives the model library information from the UE.

For content of the model library information and explanations thereof, refer to the related descriptions of step S610 in the foregoing method 600.

S720: The gNB obtains first interference information through local/cloud retrieval or prediction.

For content of the first interference information and explanations thereof, and a specific implementation of obtaining the first interference information through local/cloud retrieval or prediction, refer to the related descriptions in the foregoing method 500.

S730: The gNB determines a first encoder model based on the first interference information.

Optionally, if step S710 is performed, it indicates that the gNB learns of the model library information of the UE. In this case, the gNB may determine current interference signal strength of the UE based on the first interference information obtained through retrieval or prediction inference, and determine the corresponding first encoder model, for example, the AI CSI feedback encoder model #3, based on the model library information in Table 1.

Optionally, if step S710 is not performed, it indicates that the gNB does not learn of the model library information of the UE. In this case, the gNB determines a corresponding first decoder model, for example, the AI CSI feedback decoder model #3, from the model library information in Table 2 based on the first interference information obtained through retrieval or prediction inference, and then determines the corresponding first encoder model, for example, the AI CSI feedback encoder model #3, based on a correspondence between the first encoder model and the first decoder model (that is, the two are a two-sided model). The correspondence between the first encoder model and the first decoder model may be predefined, or may be configured or preconfigured. This is not limited in this application.

Based on the foregoing steps, after the UE and the gNB complete selection or matching of the two-sided model, the UE and the gNB may perform CSI feedback based on the two-sided model. For example, refer to steps S740 to S770 below.

S740: The gNB sends first indication information to the UE. Correspondingly, the UE receives the first indication information from the gNB.

S750: The gNB sends a first CSI-RS to the UE. Correspondingly, the UE receives the first CSI-RS from the gNB.

S760: The UE performs measurement on the first CSI-RS to obtain first CSI.

S770: The UE sends a first result to the gNB. Correspondingly, the gNB receives the first result from the UE.

For specific implementations of steps S740 to S770, refer to the related descriptions of steps S660 to S690 in the foregoing method 600.

According to the foregoing solution, the gNB triggers local (or cloud) retrieval or prediction to obtain the first interference information, determines the first encoder model based on the obtained first interference information, and indicates the first encoder model to the UE by sending the first indication information, to implement selection and pairing of the first encoder model and the first decoder model for CSI feedback. That is, the two-sided model is selected or matched by taking the first interference signal strength into consideration, to improve CSI feedback performance.

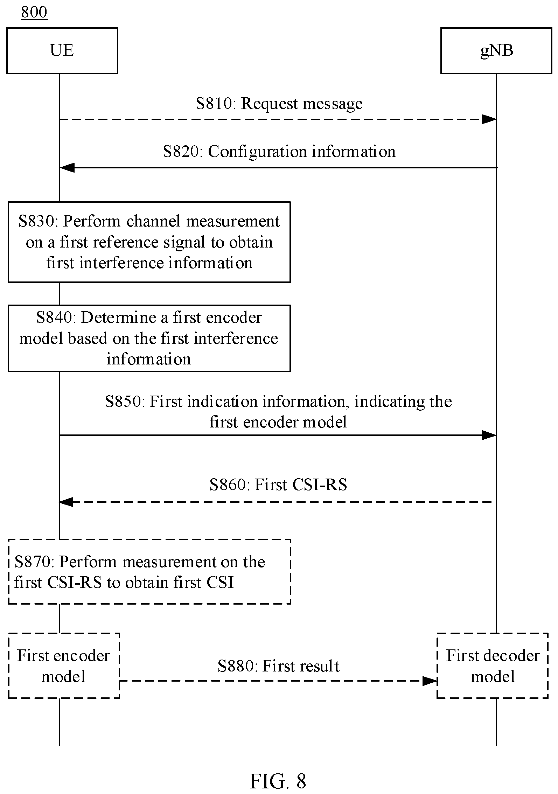

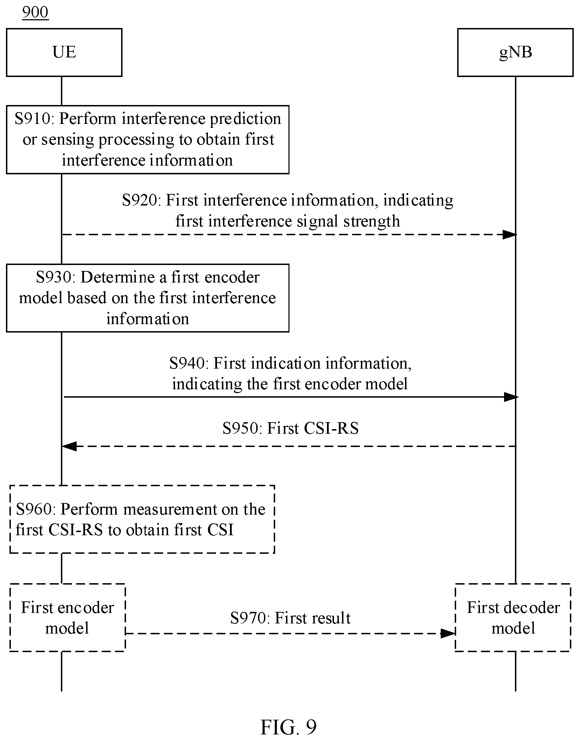

With reference to FIG. 8 and FIG. 9, an example in which the first apparatus is a network device and the second apparatus is a terminal device is used below to describe selection or matching of the first encoder model triggered by the second apparatus (for example, the UE). FIG. 8 and FIG. 9 may be considered as further details of Case 2 in FIG. 5. The first interference information in FIG. 8 is obtained by the second apparatus (for example, the UE) by performing channel measurement on the first reference signal. In comparison, the first interference information in FIG. 9 is obtained by the second apparatus (for example, the UE) through local interference prediction or sensing processing, and the first encoder model is determined by obtaining the first interference information, to implement selection or matching of the first encoder model and the first decoder.

FIG. 8 is a schematic flowchart of a communication method 800 according to an embodiment of this application. As shown in FIG. 8, the method may be performed by a second apparatus (for example, a UE) and a first apparatus (for example, a gNB), and includes the following plurality of steps. Optionally, the second apparatus may also be a chip, a chip system, a circuit, or the like in a terminal device, or a functional module/component or the like that can invoke and execute a program in a terminal device; and the first apparatus may also be a chip, a chip system, a circuit, or the like in a network device, or a functional module/component that can invoke and execute a program or the like in a network device. Optionally, the first apparatus or the second apparatus may be an AI entity or a chip or a storage device used for an AI entity, for example, a model training network element, a model storage network element, or a model inference network element such as an OAM, an OTT, or a cloud server. This is not limited in this application. Optionally, the first apparatus may include a network device and an AI entity. Optionally, the second apparatus may include a terminal device and an AI entity. This is not limited herein.

S810: Optionally, the UE sends a request message to the gNB. Correspondingly, the gNB receives the request message from the UE.

The request message is used to request the gNB to send configuration information to the UE.

S820: The gNB sends the configuration information to the UE. Correspondingly, the UE receives the configuration information from the gNB.

S830: The UE performs channel measurement on a first reference signal to obtain first interference information.

For content of the configuration information and the first interference information in steps S820 and S830, explanations thereof, and specific implementations, refer to the related descriptions of steps S620 and S630 in the foregoing method 600.

S840: The UE determines a first encoder model based on the first interference information.

In an example, the UE may determine the first encoder model based on the first interference information and local model library information. For example, assuming that first interference signal strength indicated by the first interference information obtained by the UE through measurement is 8 dBm, the UE may determine, from Table 1, the corresponding first encoder model, for example, the AI CSI feedback encoder model #3, for subsequent CSI feedback. For a meaning of the model library information and a representation form thereof, refer to the related descriptions in the foregoing method 500. Details are not described herein again.

S850: The UE sends first indication information to the gNB. Correspondingly, the gNB receives the first indication information from the UE.

For content of the first indication information and explanations thereof, refer to the related descriptions in the foregoing method 500.

In an example, after receiving the first indication information, the gNB may determine the first encoder model, for example, the AI CSI feedback encoder model #3, based on a model ID of the first encoder model and/or a model parameter of the first encoder model that are/is carried in the first indication information, and then correspondingly select a first decoder model, for example, the AI CSI feedback decoder model #3, from the local model library information.

Optionally, the gNB may send feedback information to the UE, to indicate that the gNB has successfully selected the AI CSI feedback decoder model #3. In other words, for an AI CSI feedback scenario, the UE and the gNB have identified and paired a two-sided model, for example, the AI CSI feedback encoder model #3 and the AI CSI feedback decoder model #3.

Based on the foregoing steps, after the UE and the gNB complete selection or matching of the two-sided model, the UE and the gNB may perform CSI feedback based on the two-sided model. For example, refer to steps S860 to S880 below.

S860: The gNB sends a first CSI-RS to the UE. Correspondingly, the UE receives the first CSI-RS from the gNB.

S870: The UE performs measurement on the first CSI-RS to obtain first CSI.

S880: The UE sends a first result to the gNB. Correspondingly, the gNB receives the first result from the UE.

For specific implementations of steps S860 to S880, refer to the related descriptions of steps S670 to S690 in the foregoing method 600.

According to the foregoing solution, the UE triggers a measurement procedure of the first interference information (or the first interference signal strength) to obtain the first interference information, determines the first encoder model based on the obtained first interference information, and indicates the first encoder model to the gNB by sending the first indication information, to implement selection and pairing of the first encoder model and the first decoder model for CSI feedback. That is, the two-sided model is selected or matched when the first interference signal strength is considered, to improve CSI feedback performance.

FIG. 9 is a schematic flowchart of a communication method 900 according to an embodiment of this application. As shown in FIG. 9, the method may be performed by a second apparatus (for example, a UE) and a first apparatus (for example, a gNB), and includes the following plurality of steps. Optionally, the second apparatus may also be a chip, a chip system, a circuit, or the like in a terminal device, or a functional module/component or the like that can invoke and execute a program in a terminal device; and the first apparatus may also be a chip, a chip system, a circuit, or the like in a network device, or a functional module/component that can invoke and execute a program or the like in a network device. Optionally, the first apparatus or the second apparatus may be an AI entity or a chip or a storage device used for an AI entity, for example, a model training network element, a model storage network element, or a model inference network element such as an OAM, an OTT, or a cloud server. This is not limited in this application. Optionally, the first apparatus may include a terminal device and an AI entity. Optionally, the second apparatus may include a network device and an AI entity. This is not limited herein.

S910: The UE performs interference prediction or sensing processing to obtain first interference information.

For content included in the first interference information and explanations thereof, refer to the related descriptions in the foregoing method 500.

S920: Optionally, the UE sends the first interference information to the gNB. Correspondingly, the gNB receives the first interference information from the UE.

It should be understood that after receiving the first interference information from the UE, the gNB may learn that a first encoder model determined by the UE in subsequent steps S930 and S940 or a first encoder model indicated by first indication information is associated with the first interference information, in other words, the gNB determines that the first encoder model subsequently indicated by the UE is determined based on the first interference information. For specific explanations of the association between the first encoder model and the first interference information, refer to the related descriptions in the foregoing method 500. Details are not described herein again.

S930: The UE determines the first encoder model based on the first interference information.

S940: The UE sends the first indication information to the gNB. Correspondingly, the gNB receives the first indication information from the UE.

S950: The gNB sends a first CSI-RS to the UE. Correspondingly, the UE receives the first CSI-RS from the gNB.

S960: The UE performs measurement on the first CSI-RS to obtain first CSI.

S970: The UE sends a first result to the gNB. Correspondingly, the gNB receives the first result from the UE.

For content of the first indication information in steps S930 to S970, explanations thereof, and specific implementations, refer to the related descriptions in steps S840 to S880 in the foregoing method 800.

According to the foregoing solution, the UE triggers interference measurement or sensing to obtain the first interference information, determines the first encoder model based on the obtained first interference information, and indicates the first encoder model to the gNB by sending the first indication information, to implement selection and pairing of the first encoder model and a first decoder model for CSI feedback. That is, a two-sided model is selected or matched when first interference signal strength is considered, to improve CSI feedback performance.

It should be noted that FIG. 6 to FIG. 9 are mainly described by using an example of selection or matching of the first encoder model (and/or the first decoder model). It should be understood that for a specific implementation of selection or matching of a first encoder function (and/or a first decoder function), refer to the related descriptions of selection or matching of the first encoder model (and/or the first decoder model). Details are not described herein again.

Optionally, in this embodiment of this application, selection or matching of the first encoder model (and/or the first decoder model) and selection or matching of the first encoder function (and/or the first decoder function) may be independently implemented, or may be implemented in combination. This is not limited in this application. For example, for the obtained first interference information (or the first interference signal strength), the second apparatus may correspondingly determine the first encoder model and/or the first encoder function. The first encoder function may correspond to one or more first encoder models.

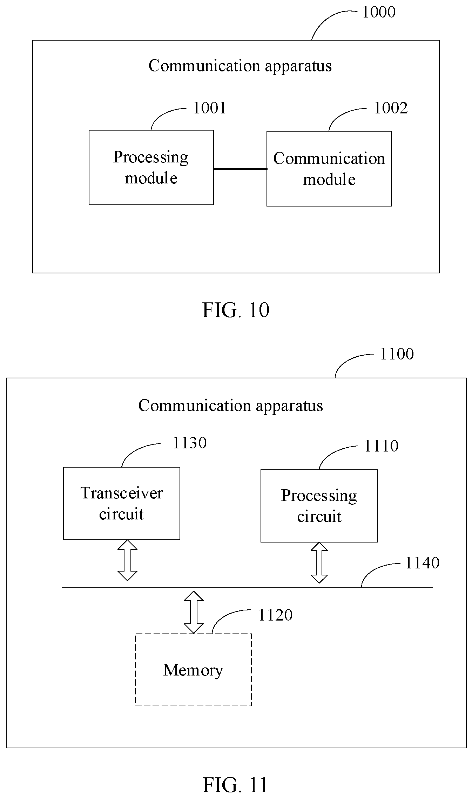

The method provided in embodiments of this application is described above in detail with reference to FIG. 1 to FIG. 9. Apparatuses provided in embodiments of this application are described below in detail with reference to FIG. 10 and FIG. 11. It should be understood that descriptions of apparatus embodiments correspond to the descriptions of the method embodiments. Therefore, for content that is not described in detail, refer to the foregoing method embodiments. For brevity, details are not described herein.

FIG. 10 is a diagram of a communication apparatus 1000 according to an embodiment of this application. As shown in FIG. 10, the communication apparatus 1000 includes a processing module 1001 and a communication module 1002. The communication apparatus 1000 may be a terminal device, or may be a communication apparatus that is used in the terminal device or is used with the terminal device in a matching manner and that can implement a method performed by the terminal device, for example, a chip, a chip system, or a circuit. Alternatively, the communication apparatus 1000 may be a network device, or may be a communication apparatus that is used in the network device or is used with the network device in a matching manner and that can implement a method performed by the network device, for example, a chip, a chip system, or a circuit.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device or the network device in the foregoing methods. A component configured to implement a receiving function in the communication module may be considered as a receiving unit, and a component configured to implement a sending function in the communication module may be considered as a sending unit. That is, the communication module includes the receiving unit and the sending unit.

When the communication apparatus 1000 is used in the terminal device, the processing module 1001 may be configured to implement a processing function of the first apparatus in the foregoing embodiments, and the communication module 1002 may be configured to implement a receiving/sending function of the first apparatus in the foregoing embodiments.

When the communication apparatus 1000 is used in the network device, the processing module 1001 may be configured to implement a processing function of the second apparatus in the foregoing embodiments, and the communication module 1002 may be configured to implement a receiving/sending function of the second apparatus in the foregoing embodiments.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented through a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 11 is a diagram of another communication apparatus 1100 according to an embodiment of this application. As shown in FIG. 11, optionally, the communication apparatus 1100 may be the first apparatus or the second apparatus, or a chip or a chip system used in the first apparatus or the second apparatus. Optionally, the communication apparatus 1100 may be the terminal device or the network device, or a chip or a chip system used in the terminal device or the network device. Optionally, in this application, the chip system may include a chip, or may include a chip and another discrete component.

The communication apparatus 1100 may be configured to implement a function of any apparatus (for example, the first apparatus or the second apparatus) in the communication system described in the foregoing examples. The communication apparatus 1100 may include at least one processing circuit 1110. Optionally, the processing circuit 1110 is coupled to a memory. The memory may be located inside the apparatus, or the memory may be integrated with the processor, or the memory may be located outside the apparatus. For example, the communication apparatus 1100 may further include at least one memory 1120. The memory 1120 stores a computer program, a computer program or instructions, and/or data necessary for implementing any one of the foregoing examples. The processing circuit 1110 may execute the computer program stored in the memory 1120, to complete the method in any one of the foregoing examples.

The communication apparatus 1100 may further include a transceiver circuit 1130, and the communication apparatus 1100 may exchange information with another device by using the transceiver circuit 1130. For example, the transceiver circuit 1130 may be a transceiver, a circuit, a bus, a module, a pin, or a transceiver circuit of another type. When the communication apparatus 1100 is a chip-type apparatus or circuit, the transceiver circuit 1130 in the apparatus 1100 may alternatively be an input/output circuit or an interface circuit, and may input information (or referred to as receiving information) and output information (or referred to as sending information). When the communication apparatus 1100 is a first apparatus, a second apparatus, a terminal device, or a network device, the transceiver circuit 1130 may be a transmitter, a receiver, a transceiver, or a communication interface. This is not limited herein.

The processing circuit 1110 may be one or more processors, or may be all or some processing circuits of the one or more processors. The processing circuit 1110 is an integrated processor, a microprocessor, an integrated circuit, a logic circuit, or the like, and the processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processing circuit 1110 may operate in collaboration with the memory 1120 and the transceiver circuit 1130. A specific connection medium between the processing circuit 1110, the memory 1120, and the transceiver circuit 1130 is not limited in this application.

Optionally, as shown in FIG. 11, the processing circuit 1110, the memory 1120, and the transceiver circuit 1130 are connected to each other through a bus 1140. Optionally, the bus may include a type of bus such as an address bus, a data bus, or a control bus. In addition, for ease of representation, FIG. 11 shows one bus 1140, but this does not mean that there is only one bus or only one type of bus.

It should be understood that the processor mentioned in embodiments of this application may be the following device or a part of circuits configured for a processing function in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of an example but not a limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

In embodiments of this application, the method in the foregoing embodiments may be performed by a terminal device and a network device, or may be performed by a chip, a chip system, or a circuit in a terminal device and a network device. The chip, the chip system, or the circuit may be installed in the terminal device and the network device.

An embodiment of this application provides a computer-readable storage medium. The computer-readable storage medium stores computer instructions for implementing the method performed by the device (for example, the terminal device or the network device) in the foregoing method embodiments.

For example, when a computer program is executed by a computer, the computer is enabled to implement the method performed by the device (for example, the terminal device or the network device) in the foregoing method embodiments.

An embodiment of this application provides a computer program product, including instructions. When the instructions are executed by a computer, the method performed by the device (for example, the terminal device or the network device (or a positioning device)) in the foregoing method embodiments is implemented.

An embodiment of this application provides a communication system. The communication system includes the terminal device and/or the network device in the foregoing embodiments.

For explanations and beneficial effect of related content in any one of the apparatuses provided above, refer to the corresponding method embodiments provided above. Details are not described herein again.

For ease of understanding the foregoing embodiments provided in this application, the following several points are described.

In this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including any combination of singular items (pieces) or plural items (pieces). For example, at least one item (piece) of a, b, and c may indicate a, b, c, a and b, a and c, b and c, or a, b, and c, where a, b, and c may be singular or plural.

In this application, "first", "second", and various numbers are used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.

In this application, the terms "include", "have", and any other variants thereof are intended to cover non-exclusive inclusion. For example, a process, method, system, product, or device that includes a list of steps or units is not necessarily limited to those clearly listed steps or units, but may include other steps or units that are not clearly listed or inherent to the process, method, product, or device.

In this application, "indicating" may include "directly indicating" and "indirectly indicating". When a piece of indication information indicates A, the indication information may directly indicate A or indirectly indicate A, but it does not indicate that the indication information definitely carries A. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

In this application, that information C is for determining information D includes that the information D is determined based on the information C only, and also includes that the information D is determined based on the information C and other information. In addition, that the information C is for determining the information D may further include an indirect determining case. For example, the information D is determined based on information E, and the information E is determined based on the information C.

In this application, that "a network element A sends information A to a network element B" may be understood as that a destination end of the information A or an intermediate network element in a transmission path between the network element A and the destination end is the network element B, and may include directly or indirectly sending information to the network element B. That "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for sending the information and the destination end. However, the destination end may understand valid information from the source end. Similar descriptions in this application may be understood similarly. Details are not described herein.

It may be understood that some optional features in embodiments of this application may be independent of other features in some scenarios, or may be combined with other features in some scenarios. This is not limited.

It may be further understood that, in some of the foregoing embodiments, sending information is mentioned a plurality of times. For example, that "a network element A sends information A to a network element B" may be understood as that a destination end of the information A or an intermediate network element in a transmission path between the network element A and the destination end is the network element B, and may include directly or indirectly sending information to the network element B. That "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for sending the information and the destination end. However, the destination end may understand valid information from the source end. Similar descriptions in this application may be understood similarly. Details are not described herein.

It may be further understood that in some of the foregoing embodiments, an example in which an AI model is an AI model used for positioning is mainly used for description. It may be understood that the AI model may also be used for another purpose.

It may be further understood that the solutions in embodiments of this application may be appropriately combined for use, and explanations or descriptions of terms in the embodiments may be mutually referenced or explained in the embodiments. This is not limited.

It may be further understood that in the foregoing method embodiments, methods and operations implemented by the terminal device or the positioning device may also be implemented by a component (for example, a chip or a circuit) of the terminal device or the positioning device. This is not limited.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first apparatus, and comprising:
receiving first indication information from a second apparatus, wherein the first indication information indicates a first encoder model or a first encoder function, the first encoder model or the first encoder function is used to process channel state information CSI, and the first encoder model or the first encoder function is related to first interference signal strength.

2. The method according to claim 1, wherein the first encoder function comprises one or more first encoder models.

3. The method according to claim 1 or 2, wherein
the first indication information comprises an identifier of the first encoder model and/or a model parameter of the first encoder model; or
the first indication information comprises an identifier of the first encoder function and/or a parameter of a model corresponding to the first encoder function.

4. The method according to any one of claims 1 to 3, wherein when the first apparatus is a terminal device, and the second apparatus is a network device, before receiving the first indication information from the second apparatus, the method further comprises:
receiving configuration information from the second apparatus, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal;
performing channel measurement on the first reference signal to obtain first interference information, wherein the first interference information indicates the first interference signal strength; and
sending the first interference information to the second apparatus.

5. The method according to any one of claims 1 to 4, wherein when the first apparatus is the terminal device, and the second apparatus is the network device, before receiving the first indication information from the second apparatus, the method further comprises:
sending model library information to the second apparatus, wherein the model library information indicates mapping relationships between a plurality of encoder models and a plurality of interference signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is comprised in one of the plurality of interference signal strength ranges.

6. The method according to any one of claims 1 to 5, wherein when the first apparatus is the terminal device, and the second apparatus is the network device, the method further comprises:
receiving a first CSI-RS from the second apparatus; and
sending a first result to the second apparatus, wherein the first result is obtained by processing first CSI based on the first encoder model or the first encoder function, the first CSI is obtained by measuring the first CSI-RS, and the first CSI is related to the first interference signal strength.

7. The method according to any one of claims 1 to 3, wherein when the first apparatus is a network device, and the second apparatus is a terminal device, before receiving the first indication information from the second apparatus, the method further comprises:
sending configuration information to the second apparatus, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal; and
first interference information is obtained by measuring the first reference signal, and the first interference information indicates the first interference signal strength.

8. The method according to claim 7, wherein before sending the configuration information to the second apparatus, the method further comprises:
receiving a request message from the second apparatus, wherein the request message is used to request the first apparatus to send the configuration information.

9. The method according to any one of claims 1 to 3, 7, or 8, wherein when the first apparatus is the network device, and the second apparatus is the terminal device, the method further comprises:
sending second indication information to the second apparatus, wherein the second indication information indicates that the first apparatus has selected or matched a first decoder model or a first decoder function, the first decoder model corresponds to the first encoder model, and the first decoder function corresponds to the first encoder function.

10. The method according to any one of claims 1 to 3, or 7 to 9, wherein when the first apparatus is the network device, and the second apparatus is the terminal device, the method further comprises:
sending a first CSI-RS to the second apparatus; and
receiving a first result from the second apparatus, wherein the first result is obtained by processing first CSI based on the first encoder model or the first encoder function, and the first CSI is obtained by measuring the first CSI-RS.

11. The method according to claim 10, wherein the method further comprises:
obtaining a second result, wherein the second result is obtained by processing the first result based on the first decoder model or the first decoder function, the first decoder model corresponds to the first encoder model, and the first decoder function corresponds to the first encoder function.

12. A communication method, applied to a second apparatus, and comprising:
obtaining first interference signal strength; and
sending first indication information to a first apparatus, wherein the first indication information indicates a first encoder model or a first encoder function, the first encoder model or the first encoder function is used to process channel state information CSI, and the first encoder model or the first encoder function is related to the first interference signal strength.

13. The method according to claim 12, wherein the first encoder function comprises one or more first encoder models.

14. The method according to claim 12 or 13, wherein the first indication information comprises an identifier of the first encoder model and/or a model parameter of the first encoder model; or the first indication information comprises an identifier of the first encoder function and/or a parameter of a model corresponding to the first encoder function.

15. The method according to any one of claims 12 to 14, wherein when the first apparatus is a terminal device, and the second apparatus is a network device, obtaining the first interference signal strength comprises:
receiving first interference information from the first apparatus, wherein the first interference information indicates the first interference signal strength.

16. The method according to claim 15, wherein before receiving the first interference information from the first apparatus, the method further comprises:
sending configuration information to the first apparatus, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal; and
the first interference information is obtained by performing channel measurement on the first reference signal.

17. The method according to any one of claims 12 to 14, wherein when the first apparatus is a terminal device, and the second apparatus is a network device, obtaining the first interference signal strength comprises:
obtaining first interference information through local retrieval or prediction; or
obtaining first interference information through cloud retrieval or prediction, wherein
the first interference information indicates the first interference signal strength.

18. The method according to any one of claims 12 to 17, wherein when the first apparatus is the terminal device, and the second apparatus is the network device, before sending the first indication information to the first apparatus, the method further comprises:
receiving model library information from the first apparatus, wherein the model library information indicates mapping relationships between a plurality of encoder models and a plurality of signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is comprised in one of the plurality of interference signal strength ranges.

19. The method according to any one of claims 12 to 14, wherein when the first apparatus is a network device, and the second apparatus is a terminal device, obtaining the first interference signal strength comprises:
receiving configuration information from the first apparatus, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal; and
performing channel measurement on the first reference signal based on the configuration information to obtain first interference information, wherein the first interference information indicates the first interference signal strength.

20. The method according to claim 19, wherein the method further comprises: sending a request message to the first apparatus, wherein the request message is used to request the first apparatus to send the configuration information.

21. The method according to any one of claims 12 to 14, wherein when the first apparatus is a network device, and the second apparatus is a terminal device, obtaining the first interference signal strength comprises:
performing an interference prediction or sensing operation to obtain the first interference signal strength.

22. The method according to any one of claims 12 to 21, wherein when the first apparatus is the network device, and the second apparatus is the terminal device, the method further comprises:
receiving second indication information from the first apparatus, wherein the second indication information indicates that the first apparatus has selected or matched a first decoder model or a first decoder function, the first decoder model corresponds to the first encoder model, and the first decoder function corresponds to the first encoder function.

23. The method according to any one of claims 12 to 22, wherein when the first apparatus is the network device, and the second apparatus is the terminal device, the method further comprises:
sending the first interference information to the first apparatus, wherein the first interference information indicates the first interference signal strength.

24. The method according to any one of claims 12 to 23, wherein when the first apparatus is the terminal device, and the second apparatus is the network device, the method further comprises:
sending a first CSI-RS to the first apparatus; and
receiving a first result from the first apparatus, wherein the first result is obtained by processing first CSI based on the first encoder model or the first encoder function, the first CSI is obtained by measuring the first CSI-RS, and the first CSI is related to the first interference signal strength.

25. The method according to claim 24, wherein the method further comprises:
obtaining a second result, wherein the second result is obtained by processing the first result based on the first decoder model or the first decoder function, the first decoder model corresponds to the first encoder model, and the first decoder function corresponds to the first encoder function.

26. The method according to any one of claims 12 to 25, wherein when the first apparatus is the network device, and the second apparatus is the terminal device, the method further comprises:
receiving a first CSI-RS from the first apparatus; and
sending a first result to the first apparatus, wherein the first result is obtained by processing first CSI based on the first encoder model or the first encoder function, and the first CSI is obtained by measuring the first CSI-RS.

27. A communication method, applied to a terminal device or a chip in a terminal device, and comprising:
receiving first indication information from a network device, wherein the first indication information indicates a first encoder model or a first encoder function, the first encoder model or the first encoder function is used to process channel state information CSI, and the first encoder model or the first encoder function is related to first interference signal strength.

28. The method according to claim 27, wherein the first encoder function comprises one or more first encoder models.

29. The method according to claim 27 or 28, wherein the first indication information comprises an identifier of the first encoder model and/or a model parameter of the first encoder model; or the first indication information comprises an identifier of the first encoder function and/or a parameter of a model corresponding to the first encoder function.

30. The method according to any one of claims 27 to 29, wherein before receiving the first indication information from the network device, the method further comprises:
receiving configuration information from the network device, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal;
performing channel measurement on the first reference signal to obtain first interference information, wherein the first interference information indicates the first interference signal strength; and
sending the first interference information to the network device.

31. The method according to any one of claims 27 to 30, wherein before receiving the first indication information from the network device, the method further comprises:
sending model library information to the network device, wherein the model library information indicates mapping relationships between a plurality of encoder models and a plurality of interference signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is comprised in one of the plurality of interference signal strength ranges.

32. The method according to any one of claims 27 to 31, wherein the method further comprises:
receiving a first CSI-RS from the network device; and
sending a first result to the network device, wherein the first result is obtained by processing first CSI based on the first encoder model or the first encoder function, the first CSI is obtained by measuring the first CSI-RS, and the first CSI is related to the first interference signal strength.

33. A communication method, applied to a network device or a chip in a network device, and comprising:
obtaining first interference signal strength; and
sending first indication information to a terminal device, wherein the first indication information indicates a first encoder model or a first encoder function, the first encoder model or the first encoder function is used to process channel state information CSI, and the first encoder model or the first encoder function is related to the first interference signal strength.

34. The method according to claim 33, wherein the first encoder function comprises one or more first encoder models.

35. The method according to claim 33 or 34, wherein the first indication information comprises an identifier of the first encoder model and/or a model parameter of the first encoder model; or the first indication information comprises an identifier of the first encoder function and/or a parameter of a model corresponding to the first encoder function.

36. The method according to any one of claims 33 to 35, wherein obtaining the first interference signal strength comprises:
receiving first interference information from the terminal device, wherein the first interference information indicates the first interference signal strength.

37. The method according to claim 36, wherein before receiving the first interference information from the terminal device, the method further comprises:
sending configuration information to the terminal device, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal; and
the first interference information is obtained by performing channel measurement on the first reference signal.

38. The method according to any one of claims 33 to 35, wherein obtaining the first interference signal strength comprises:
obtaining first interference information through local retrieval or prediction; or
obtaining first interference information through cloud retrieval or prediction, wherein
the first interference information indicates the first interference signal strength.

39. The method according to any one of claims 33 to 38, wherein the method further comprises:
receiving model library information from the terminal device, wherein the model library information indicates mapping relationships between a plurality of encoder models and a plurality of signal strength ranges or the model library information indicates mapping relationships between a plurality of encoder functions and a plurality of interference signal strength ranges, the first encoder model belongs to the plurality of encoder models, the first encoder function belongs to the plurality of encoder functions, and the first interference signal strength is comprised in one of the plurality of interference signal strength ranges.

40. The method according to any one of claims 33 to 39, wherein the method further comprises:
sending a first CSI-RS to the terminal device; and
receiving a first result from the terminal device, wherein the first result is obtained by processing first CSI based on the first encoder model or the first encoder function, and the first CSI is obtained by measuring the first CSI-RS.

41. The method according to claim 40, wherein the method further comprises:
obtaining a second result, wherein the second result is obtained by processing the first result based on a first decoder model or a first decoder function, the first decoder model corresponds to the first encoder model, and the first decoder function corresponds to the first encoder function.

42. A communication method, applied to a terminal device or a chip in a terminal device, and comprising:
obtaining first interference signal strength; and
sending second indication information to a network device, wherein the second indication information indicates a first encoder model or a first encoder function, the first encoder model or the first encoder function is used to process channel state information CSI, and the first encoder model or the first encoder function is related to the first interference signal strength.

43. The method according to claim 42, wherein the first encoder function comprises one or more first encoder models.

44. The method according to claim 42 or 43, wherein the second indication information comprises an identifier of the first encoder model and/or a model parameter of the first encoder model; or the second indication information comprises an identifier of the first encoder function and/or a parameter of a model corresponding to the first encoder function.

45. The method according to any one of claims 42 to 44, wherein obtaining the first interference signal strength comprises:
receiving configuration information from the network device, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal; and
performing channel measurement on the first reference signal based on the configuration information to obtain first interference information, wherein the first interference information indicates the first interference signal strength.

46. The method according to claim 45, wherein before obtaining the first interference signal strength, the method further comprises:
sending a request message to the network device, wherein the request message is used to request the network device to send the configuration information.

47. The method according to any one of claims 42 to 44, wherein obtaining the first interference signal strength comprises:
performing an interference prediction or sensing operation to obtain the first interference signal strength.

48. The method according to any one of claims 42 to 46, wherein the method further comprises:
receiving third indication information from the network device, wherein the third indication information indicates that the network device has selected or matched a first decoder model or a first decoder function, the first decoder model corresponds to the first encoder model, and the first decoder function corresponds to the first encoder function.

49. The method according to any one of claims 42 to 48, wherein the method further comprises:
sending first interference information to the network device, wherein the first interference information indicates the first interference signal strength.

50. The method according to any one of claims 42 to 49, wherein the method further comprises:
receiving a first CSI-RS from the network device; and
sending a first result to the network device, wherein the first result is obtained by processing first CSI based on the first encoder model or the first encoder function, the first CSI is obtained by measuring the first CSI-RS, and the first CSI is related to the first interference signal strength.

51. A communication method, applied to a network device or a chip in a network device, and comprising:
receiving second indication information from a terminal device, wherein the second indication information indicates a first encoder model or a first encoder function, the first encoder model or the first encoder function is used to process channel state information CSI, and the first encoder model or the first encoder function is related to first interference signal strength.

52. The method according to claim 51, wherein the first encoder function comprises one or more first encoder models.

53. The method according to claim 51 or 52, wherein the second indication information comprises an identifier of the first encoder model and/or a model parameter of the first encoder model; or the second indication information comprises an identifier of the first encoder function and/or a parameter of a model corresponding to the first encoder function.

54. The method according to any one of claims 51 to 53, wherein before receiving the second indication information from the terminal device, the method further comprises:
sending configuration information to the terminal device, wherein the configuration information indicates a first reference signal, and the first reference signal comprises one or more of the following: a channel state information reference signal CSI-RS, a zero power channel state information reference signal ZP CSI-RS, or a channel state information interference measurement CSI-IM signal; and
first interference information is obtained by measuring the first reference signal, and the first interference information indicates the first interference signal strength.

55. The method according to claim 54, wherein before sending the configuration information to the terminal device, the method further comprises:
receiving a request message from the terminal device, wherein the request message is used to request the network device to send the configuration information.

56. The method according to any one of claims 51 to 55, wherein the method further comprises:
sending third indication information to the terminal device, wherein the third indication information indicates that the terminal device has selected or matched a first decoder model or a first decoder function, the first decoder model corresponds to the first encoder model, and the first decoder function corresponds to the first encoder function.

57. The method according to any one of claims 51 to 56, wherein the method further comprises:
receiving the first interference information from the terminal device, wherein the first interference information indicates the first interference signal strength.

58. The method according to any one of claims 51 to 57, wherein the method further comprises:
sending a first CSI-RS to the terminal device; and
receiving a first result from the terminal device, wherein the first result is obtained by processing first CSI based on the first encoder model or the first encoder function, and the first CSI is obtained by measuring the first CSI-RS.

59. The method according to claim 58, wherein the method further comprises:
obtaining a second result, wherein the second result is obtained by processing the first result based on the first decoder model or the first decoder function, the first decoder model corresponds to the first encoder model, and the first decoder function corresponds to the first encoder function.

60. A communication apparatus, comprising a module configured to perform the method according to any one of claims 1 to 11, 27 to 32, and 42 to 50, or a module configured to perform the method according to any one of claims 12 to 26, 33 to 41, and 51 to 59.

61. A communication apparatus, comprising at least one processor, wherein the at least one processor is configured to execute a computer program or instructions in a memory, so that the method according to any one of claims 1 to 11, 27 to 32, and 42 to 50 is performed, or the method according to any one of claims 12 to 26, 33 to 41, and 51 to 59 is performed.

62. A computer-readable storage medium, wherein the computer-readable storage medium is configured to store a computer program; and when the computer program is run on a computer, the method according to any one of claims 1 to 59 is performed.

63. A computer program product, comprising a computer program or instructions, wherein when the computer program or the instructions are executed by a processor, the method according to any one of claims 1 to 59 is performed.
